# EUROPÄISCHE PATENTSCHRIFT

(11) **EP 4 275 925 B1**
(45) Veröffentlichungstag und Bekanntmachung des Hinweises auf die Patenterteilung: **21.10.2026**
(21) Anmeldenummer: 23197354.6
(22) Anmeldetag: 22.04.2021
(51) Int. Cl.: B60D 1/06, B60D 1/24, B60D 1/54, B60D 1/62

(54) **ANHÄNGEKUPPLUNG**
TRAILER COUPLING
ACCOUPLEMENT DE REMORQUE

(30) Priorität: 27.04.2020 DE 102020111468
(43) Veröffentlichungstag der Anmeldung: 15.11.2023
(62) Dokumentnummer(n) der früheren Anmeldung(en) nach Art. 76 EPÜ: 21169959.0 / 3 904 129
(73) Patentinhaber: ACPS Automotive GmbH, 74379 Ingersheim (DE)
(72) Erfinder: Gentner, Wolfgang, 71711 Steinheim (DE)
(74) Vertreter: Hoeger, Stellrecht & Partner Patentanwälte mbB

(56) Entgegenhaltungen:
- EP-A1- 1 886 847
- DE-A1- 102017 102 505

## Beschreibung

Die Erfindung betrifft eine Anhängekupplung, umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenklagereinheit, mittels welcher der Schwenklagerkörper zur Ausführung einer Schwenkbewegung um eine Schwenkachse zwischen der Arbeitsstellung und der Ruhestellung verschwenkbar aufgenommen ist, und eine zwischen der Schwenklagereinheit und dem Schwenklagerkörper wirkende Drehblockiereinrichtung mit einerseits mindestens zwei Drehblockiereinheiten, von denen jede einen Drehblockierkörper aufweist, der mittels einer Führungsaufnahme eines Führungskörpers in einer Führungsrichtung bewegbar geführt ist und der in der Führungsrichtung durch eine quer zur Führungsrichtung verlaufende, an einem Betätigungskörper vorgesehene Druckfläche bewegbar ist, und mit andererseits mindestens zwei Arbeitsstellungsaufnahmen und mindestens zwei Ruhestellungsaufnahmen, wobei durch eine Bewegung des Betätigungskörpers in einer Betätigungsrichtung die Drehblockierkörper aller Drehblockiereinheiten in der Führungsrichtung bewegbar und beaufschlagbar sind und wobei die Drehblockierkörper aller Drehblockiereinheiten in der Arbeitsstellung oder der Ruhestellung durch Bewegung in der Führungsrichtung in eine Drehblockierstellung bringbar sind und in dieser jeder Drehblockierkörper mit jeweils einer der Arbeitsstellungsaufnahmen oder der Ruhestellungsaufnahmen in Eingriff kommt, um eine Schwenkbewegung des Schwenklagerkörpers um die Schwenkachse relativ zum Führungskörper zu blockieren, und wobei die Drehblockierkörper in eine Lösestellung bringbar sind und in dieser mit der jeweiligen Arbeitsstellungsaufnahme oder der jeweiligen Ruhestellungsaufnahme außer Eingriff stehen und die Schwenkbewegung des Schwenklagerkörpers freigeben.

Derartige Anhängekupplungen sind aus dem Stand der Technik bekannt. Das Dokument EP 1 886 847 A1 offenbart eine derartige Anhängekupplung.

Bei diesen Erfolgt in der Lösestellung des Betätigungskörpers eine Fixierung desselben mittels einer hierzu vorgesehenen Rasteinrichtung.

Diese Lösung ist zum einen aufwändig, komplex und gegebenenfalls auch störungsanfällig.

Der Erfindung liegt daher die Aufgabe zugrunde, eine möglichst einfache Fixierung der Drehblockiereinrichtung in der Lösestellung zu erreichen.

Diese Aufgabe wird bei einer Anhängekupplung der eingangs beschriebenen Art erfindungsgemäß dadurch gelöst, dass die Winkelabstände mindestens einer der Drehblockiereinheiten zu den in einer Umlaufrichtung um die Schwenkachse sowie zu den entgegengesetzt zu dieser Umlaufrichtung benachbart angeordneten Drehblockiereinheiten ungleich sind und dass in der Arbeitsstellung die Arbeitsstellungsaufnahmen derart angeordnet sind, dass die Drehblockierkörper jeder der Drehblockiereinheiten mit jeweils einer der Arbeitsstellungsaufnahmen in Eingriff bringbar sind, dass in der Ruhestellung die Ruhestellungsaufnahmen derart angeordnet sind, dass der Drehblockierkörper jeder der Drehblockiereinheiten mit jeweils einer der Ruhestellungsaufnahmen in Eingriff bringbar ist und dass in allen für den Betrieb vorgesehenen Schwenkstellungen des Schwenklagerkörpers, die außerhalb der Arbeitsstellung und der Ruhestellung liegen, der Drehblockierkörper mindestens einer der Drehblockiereinheiten einer zwischen den Arbeitsstellungsaufnahmen und den Ruhestellungsaufnahmen liegenden Blockierfläche gegenüber liegt und die Blockierfläche, insbesondere bei einer Kraftbeaufschlagung des Betätigungskörpers, eine Bewegung des Betätigungskörpers von der Lösestellung in die Drehblockierstellung blockiert.

Die Ungleichheit der Winkelabstände beträgt, ausgehend von gleichen Winkelabständen, beispielsweise mindestens eine Abweichung von gleichen Winkelabständen in der Größenordnung von der Hälfte des Winkelbereichs über den sich jede der Aufnahmen erstreckt, vorzugsweise bis zu dem Winkelbereich über den sich jede der Aufnahmen erstreckt.

Der Vorteil der erfindungsgemäßen Lösung ist somit darin zu sehen, dass die Fixierung des Betätigungskörpers in der Lösestellung in einfacher und zuverlässiger Weise mittels der ohnehin vorhandenen Drehblockierkörper realisiert werden kann und dass außerdem eine signifikante Geräuschminderung beim Übergang dieser Anhängekupplung von der Lösestellung in die Drehblockierstellung der Drehblockierkörper erfolgt, da die Drehblockierkörper in einfacher Weise von den Blockierflächen in die Aufnahmen gleiten können.

Die erfindungsgemäße Lösung wird ferner bei einer Anhängekupplung der eingangs beschriebenen Art dadurch gelöst, dass die Drehblockiereinheiten zur Bildung einer Drehblockierkonfiguration in Winkelabständen um die Schwenkachse herum angeordnet sind, dass die Arbeitsstellungsaufnahmen und die Ruhestellungsaufnahmen zur Bildung jeweils einer Aufnahmenkonfiguration für die Arbeitsstellung und die Ruhestellung in denselben Winkelabständen um die Schwenkachse angeordnet sind wie die Drehblockiereinheiten, dass die Drehblockierkonfiguration und die Aufnahmenkonfiguration der Arbeitsstellungsaufnahmen in der Arbeitsstellung beziehungsweise der Ruhestellungsaufnahmen in der Ruhestellung deckungsgleich zueinander stehen, so dass die Drehblockierkörper in die Arbeitsstellungsaufnahmen beziehungsweise Ruhestellungsaufnahmen eingreifen können, und dass die Winkelabstände zwischen den Drehblockiereinheiten der Drehblockierkonfiguration und die Winkelabstände zwischen den Arbeitsstellungsaufnahmen beziehungsweise Ruhestellungsaufnahmen der Aufnahmenkonfigurationen so gewählt sind, dass die Drehblockierkonfiguration und die Aufnahmenkonfigurationen nur in der Arbeitsstellung oder der Ruhestellung deckungsgleich zueinander stehen und somit nur in diesen ein Übergang des Betätigungskörpers von der Lösestellung in die Drehblockierstellung erlauben, während in den anderen Schwenkstellungen des Schwenklagerkörpers ein Übergang des Betätigungskörpers von der Lösestellung in die Drehblockierstellung nicht möglich ist.

Eine vorteilhafte Lösung sieht vor, dass zwischen den Arbeitsstellungsaufnahmen und den Ruhestellungsaufnahmen Blockierflächen verlaufen, gegen welche die Drehblockierkörper anlegbar sind und von welchen ausgehend sich die Arbeitsstellungsaufnahmen und die Ruhestellungsaufnahmen erstrecken, dass die Drehblockiereinheiten und die Arbeitsstellungsaufnahmen und die Ruhestellungsaufnahmen um die Schwenkachse herum derart in Winkelabständen voneinander angeordnet sind, dass in allen vorgesehenen Schwenkstellungen des Schwenklagerkörpers, ausgenommen die Arbeitsstellung und die Ruhestellung, der Drehblockierkörper mindestens einer der Drehblockiereinheiten einer der Blockierflächen gegenüberliegt und somit diese Blockierfläche, insbesondere bei einer Kraftbeaufschlagung des Betätigungskörpers, eine Bewegung des Betätigungskörpers in der Betätigungsrichtung und folglich auch ein kraftbeaufschlagtes Eingreifen der Drehblockierkörper jeder der Drehblockiereinheiten in jeweils eine der Arbeitsstellungsaufnahmen oder Ruhestellungsaufnahmen blockiert.

Der Vorteil aller vorstehend genannten erfindungsgemäßen Lösungen ist darin zu sehen, dass damit eine konstruktiv einfache Lösung zur Verfügung steht, um den Betätigungskörper in der Lösestellung zu halten und nur in der Arbeitsstellung in die Drehblockierstellung übergehen zu lassen, wobei insbesondere vorteilhafterweise die ohnehin für die Drehblockiereinrichtung vorhandenen Drehblockierkörper eingesetzt werden können.

Im Rahmen der erfindungsgemäßen Lösung hat es sich als besonders vorteilhaft erwiesen, wenn die Zahl der Drehblockiereinheiten der Zahl der Arbeitsstellungsaufnahmen und der Zahl der Ruhestellungsaufnahmen entspricht. Ferner ist es, um eine räumlich, insbesondere in Richtung der Schwenkachse kompakt bauende Lösung zu erhalten, von Vorteil, wenn die Drehblockierkörper aller Drehblockiereinheiten symmetrisch zu einer senkrecht zur Schwenkachse verlaufenden und diese schneidenden geometrischen Ebene ausgebildet und angeordnet sind.

Eine besonders vorteilhafte Lösung sieht vor, dass die Blockierflächen den Drehblockierkörpern der Drehblockiereinheiten zugewandt, insbesondere quer, vorzugsweise senkrecht zur Führungsrichtung, verlaufen, so dass die Drehblockierkörper beim Anliegen an diesen mit geringem oder nahezu keinem Bewegungswiderstand über die Blockierflächen bewegbar sind.

Besonders vorteilhaft ist es, wenn die Blockierflächen in einem definierten Radius um die Schwenkachse verlaufen, so dass bei der Schwenkbewegung die an diesen Blockierflächen anliegenden Drehblockierkörper keine zusätzliche radiale Bewegung zur Schwenkachse durchführen.

Ferner ist vorteilhafterweise vorgesehen, dass die Blockierflächen bis zu Öffnungsrändern der Arbeitsstellungsaufnahmen und der Ruhestellungsaufnahmen verlaufen und in diese übergehen.

Insbesondere ist vorzugsweise vorgesehen, dass die Öffnungsränder der Arbeitsstellungsaufnahmen und der Ruhestellungsaufnahmen in demselben radialen Abstand von der Schwenkachse liegen wie die Blockierflächen, so dass ein Bewegen der an den Blockierflächen anliegenden Drehblockierkörper über die Öffnungsränder hinweg in die Aufnahmen hinein ohne einen zusätzlichen Bewegungswiderstand erfolgen kann, wie er beispielsweise bei unterschiedlichen Abständen der Öffnungsränder von der Schwenkachse in Relation zum Abstand der Blockierflächen von der Schwenkachse auftreten würde.

Insbesondere hat diese Lösung auch noch den Vorteil, dass damit ein einfacher und bewegungswiderstandsfreier Übergang des Schwenklagerkörpers von der Arbeitsstellung in eine Schwenkstellung erfolgt, da auch in diesem Fall die Drehblockierkörper die Arbeitsstellungsaufnahmen und die Ruhestellungsaufnahmen im Wesentlichen ohne Bewegungswiderstand über die Öffnungsränder verlassen und sich in Richtung der Blockierflächen bewegen können.

Besonders vorteilhaft ist es, wenn mindestens einer der Drehblockierkörper der Drehblockiereinheiten bei einer Schwenkbewegung des Schwenklagerkörpers in Richtung der Arbeitsstellung, insbesondere während der von der Ruhestellung bis zur Arbeitsstellung verlaufenden Schwenkbewegung, an einer der Blockierflächen anliegt, insbesondere durch Einwirkung des Betätigungskörpers kraftbeaufschlagt anliegt, wobei die Kraftbeaufschlagung beispielsweise durch für die Lösestellung der Drehblockierkörper vorgesehene Rückzugsaufnahmen im Betätigungskörper erfolgt, die mit quer zur Führungsrichtung verlaufenden Flächen auf die Drehblockierkörper einwirken.

Insbesondere ist es günstig, wenn die Drehblockierkörper vor Erreichen der Arbeitsstellung an den Blockierflächen kraftbeaufschlagt anliegen und anschließend an Öffnungsrändern der Aufnahmen kraftbeaufschlagt anliegend in die Aufnahmen eintreten, so dass dadurch die Geräuschausprägung beim Übergang der Drehblockierkörper von der Lösestellung in die Drehblockierstellung möglichst gering gehalten werden kann, im Gegensatz zu einem Fall, in dem die Drehblockierkörper zunächst mit Spiel an den Blockierflächen anliegen, dann kraftbeaufschlagt an die Blockierflächen angelegt werden und dann von den Blockierflächen in die Arbeitsstellungsaufnahmen eintreten oder dem Fall, dass die Drehblockierkörper mit Spiel zu den Blockierflächen liegend sich in die Arbeitsstellung bewegen und in der Arbeitsstellung die Kraftbeaufschlagung erfahren, um in die Arbeitsstellungsaufnahmen einzutreten. Hinsichtlich der Ausbildung der Arbeitsstellungsaufnahmen ist es besonders vorteilhaft, wenn sich die Arbeitsstellungsaufnahmen ausgehend von den Blockierflächen in der Führungsrichtung, insbesondere mit mindestens einer Komponente in radialer Richtung zur Schwenkachse, erstrecken, so dass die Drehblockierkörper bei der Bewegung in der Führungsrichtung keinerlei zusätzliche Umlenkung beim Eintritt in die Arbeitsstellungsaufnahmen erfahren.

Besonders vorteilhaft ist es, wenn mindestens einer der Drehblockierkörper der Drehblockiereinheiten bei einer Schwenkbewegung des Schwenklagerkörpers in Richtung der Ruhestellung, insbesondere während der von der Arbeitsstellung bis zur Ruhestellung verlaufenden Schwenkbewegung, an einer der Blockierflächen anliegt, insbesondere durch Einwirkung des Betätigungskörpers kraftbeaufschlagt anliegt, wobei die Kraftbeaufschlagung beispielsweise durch für die Lösestellung der Drehblockierkörper vorgesehene Rückzugsaufnahmen im Betätigungskörper erfolgt, die mit quer zur Führungsrichtung verlaufenden Flächen auf die Drehblockierkörper einwirken.

Insbesondere ist es günstig, wenn die Drehblockierkörper vor Erreichen der Ruhestellung an den Blockierflächen kraftbeaufschlagt anliegen und anschließend an Öffnungsrändern der Ruhestellungsaufnahmen kraftbeaufschlagt anliegend in die Ruhestellungsaufnahmen eintreten, so dass dadurch die Geräuschausprägung beim Übergang der Drehblockierkörper von der Lösestellung in die Drehblockierstellung möglichst gering gehalten werden kann, im Gegensatz zu einem Fall, in dem die Drehblockierkörper zunächst mit Spiel an den Blockierflächen anliegen, dann kraftbeaufschlagt an die Blockierflächen angelegt werden und dann von den Blockierflächen in die Ruhestellungsaufnahmen eintreten oder dem Fall, dass die Drehblockierkörper mit Spiel zu den Blockierflächen liegend sich in die Arbeitsstellung bewegen und in der Arbeitsstellung die Kraftbeaufschlagung erfahren, um in die Ruhestellungsaufnahmen einzutreten.

Hinsichtlich der Ausbildung der Ruhestellungsaufnahmen ist es besonders vorteilhaft, wenn sich die Ruhestellungsaufnahmen ausgehend von den Blockierflächen in der Führungsrichtung, insbesondere mit mindestens einer Komponente in radialer Richtung zur Schwenkachse, erstrecken, so dass die Drehblockierkörper bei der Bewegung in der Führungsrichtung keinerlei zusätzliche Umlenkung beim Eintritt in die Ruhestellungsaufnahmen erfahren.

Ferner wurden hinsichtlich der Ausrichtung der Arbeitsstellungsaufnahmen und der Ruhestellungsaufnahmen und der Blockierflächen relativ zur Führungshülse keine näheren Angaben gemacht.

So sieht eine vorteilhafte Lösung vor, dass die Arbeitsstellungsaufnahmen und der Ruhestellungsaufnahmen und die Blockierflächen der Führungshülse zugewandt angeordnet sind, so dass dadurch eine umlenkungsfreie Bewegung der Drehblockierkörper in Richtung der Blockierflächen oder in Richtung der Arbeitsstellungsaufnahmen und der Ruhestellungsaufnahmen erfolgen kann.

Prinzipiell könnte der Führungskörper gemeinsam mit dem Schwenklagerkörper um die Schwenkachse schwenkbar sein.

Eine konstruktiv besonders günstige Lösung sieht jedoch vor, dass der Führungskörper ein Teil der fahrzeugfest angeordneten Schwenklagereinheit ist.

Ferner ist hinsichtlich der Ausbildung des Führungskörpers vorgesehen, dass in dem Führungskörper alle Führungsaufnahmen für die Drehblockierkörper der Drehblockiereinheiten angeordnet sind.

Darüber hinaus ist es zweckmäßig, wenn die Führungsrichtung mit mindestens einer Komponente in radialer Richtung zur Schwenkachse verläuft, so dass dadurch die Drehblockierkörper zumindest mit einer Komponente in radialer Richtung zur Schwenkachse zwischen der Drehblockierstellung und der Lösestellung bewegt werden und somit keine ausschließliche Bewegung der Drehblockierkörper in Richtung der Schwenkachse erfolgt, um diese zwischen der Drehblockierstellung und der Lösestellung zu bewegen.

Eine konstruktiv besonders günstige Lösung sieht vor, dass der Führungskörper eine Führungshülse mit Führungsaufnahmen für die Drehblockierkörper der Drehblockiereinheiten aufweist und dass insbesondere die Drehblockierkörper durch den sich in radialer Richtung an den Schwenklagerkörper anschließenden Führungskörper geführt sind.

Im Zusammenhang mit der Erläuterung der voranstehenden Ausführungsbeispiele wurde nicht näher darauf eingegangen, wie der Schwenklagerkörper an der Schwenklagereinheit schwenkbar gelagert sein soll.

Hierzu könnte beispielsweise ein dafür vorgesehenes Lager an der Schwenklagereinheit vorgesehen sein, das unabhängig vom Führungskörper ist.

Konstruktiv besonders einfach ist es jedoch, wenn der Führungskörper ein Schwenklager für den Schwenklagerkörper aufweist, das heißt entweder ein Schwenklager für den Schwenklagerkörper trägt oder selbst mit einer Außenfläche ein Schwenklager für den Schwenklagerkörper bildet.

Hinsichtlich der Bewegung der Betätigungskörper in Bezug auf den Führungskörper wurden ebenfalls keine näheren Angaben gemacht.

So sieht eine vorteilhafte Lösung vor, dass der Betätigungskörper relativ zu dem Führungskörper bewegbar geführt ist.

Dabei könnte der Betätigungskörper relativ zu dem Führungskörper in Richtung der Schwenkachse zwischen der Drehblockierstellung und der Lösestellung bewegbar sein, um die Drehblockierkörper in den entsprechenden Stellungen zu bewegen.

Eine hinsichtlich des Raumbedarfs besonders optimierte Lösung sieht vor, dass der Betätigungskörper um die Schwenkachse drehbar angeordnet ist und insbesondere sich über einen Winkelbereich um die Schwenkachse erstreckende und in Richtung parallel zur Führungsrichtung variierende Keilflächen, vorzugsweise kombiniert mit Rückzugsaufnahmen aufweist.

Darüber hinaus wurden hinsichtlich der Anordnung der Aufnahmen und der Blockierflächen ebenfalls keine näheren Angaben gemacht.

So sieht eine vorteilhafte Lösung vor, dass die Aufnahmen und die Blockierflächen an dem Schwenklagerkörper angeordnet sind.

Des Weiteren ist eine konstruktive Lösung hinsichtlich der Aufnahme der wirkenden Kräfte dann besonders günstig, wenn der Betätigungskörper von dem Führungskörper umschlossen ist und wenn insbesondere der Schwenklagerkörper den Führungskörper umgreift.

Hinsichtlich der Anordnung der Drehblockierkörper relativ zum Betätigungskörper wurden ebenfalls keine näheren Angaben gemacht.

Prinzipiell könnten die Drehblockierkörper so angeordnet sein, dass sie von dem Betätigungskörper umgriffen werden.

Für den räumlichen Aufbau der erfindungsgemäßen Anhängekupplung hat es sich ebenfalls als vorteilhaft erwiesen, wenn die Drehblockierkörper um den Betätigungskörper herum angeordnet sind.

Als konstruktiv besonders vorteilhaft hat es sich erwiesen, wenn der Schwenklagerkörper einen die Schwenklagereinheit außenliegend umschließenden Außenkörper bildet, der relativ zu der Schwenklagereinheit in Richtung der Schwenkachse unverschiebbar angeordnet ist, und wenn insbesondere der Schwenklagerkörper ein zumindest einen Teilbereich der Drehblockiereinheit außenliegend umschließenden Außenkörper bildet, der relativ zu dem Führungskörper in Richtung der Schwenkachse unverschiebbar angeordnet ist, so dass dadurch der Schwenklagerkörper beim Übergang der Drehblockierkörper von der Drehblockierstellung in die Lösestellung und umgekehrt keine Bewegung in Richtung der Schwenkachse durchführt, sondern in Richtung der Schwenkachse unverschiebbar angeordnet werden kann.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise ist zwischen einem Gehäuse der Schwenklagereinheit und mindestens einer Endseite des Außenkörpers eine um die Schwenkachse umlaufende Dichtung vorgesehen, mit welcher eine Abdichtung gegen eindringenden Schmutz und Feuchtigkeit erfolgt.

Bei einer derartigen Lösung stellt der Schwenklagerkörper gleichzeitig den die Schwenklagereinheit schützenden und umschließenden Außenkörper dar und dadurch, dass der Außenkörper gegenüber der Schwenklagereinheit in Richtung der Schwenkachse unverschiebbar angeordnet ist, wird insbesondere erreicht, dass eine einfache Abdichtung zwischen dem Außenkörper und der Schwenklagereinheit realisierbar ist.

Konstruktiv besonders günstig ist eine Lösung, bei welcher der Schwenklagerkörper mindestens einen einen Teilbereich der Drehblockiereinrichtung außenliegend umschließenden Außenkörper bildet, der gegenüber dem Führungskörper in Richtung der Schwenkachse unverschiebbar angeordnet ist.

Insbesondere ist vorgesehen, dass die Drehblockierkörper durch den Betätigungskörper von der Lösestellung in die Drehblockierstellung bewegbar sind. Vorzugsweise ist dabei der Betätigungskörper so ausgebildet, dass er in der Lösestellung die Lösestellung der Drehblockierkörper zulässt.

Insbesondere sieht eine weitere Ausbildung des Drehblockierkörpers vor, dass dieser in der Drehblockierstellung die Drehblockierkörper in ihrer Drehblockierstellung hält.

Um sicherzustellen, dass die Drehblockierkörper stets in ihre Drehblockierstellung übergehen, insbesondere dann, wenn keine aktive Betätigung des Betätigungskörpers erfolgt, ist vorzugsweise vorgesehen, dass der Betätigungskörper durch einen elastischen Kraftspeicher in Richtung seiner Drehblockierstellung beaufschlagt ist.

Um den Betätigungskörper nun von der Drehblockierstellung in die Lösestellung bewegen zu können, ist vorzugsweise vorgesehen, dass der Betätigungskörper durch eine Betätigungseinrichtung von der Drehblockierstellung in die Lösestellung bewegbar ist.

Insbesondere erfolgt ein derartiges Bewegen des Betätigungskörpers durch die Betätigungseinrichtung entgegen der Beaufschlagung durch den Kraftspeicher, das heißt, dass die Betätigungseinrichtung der Beaufschlagung durch den Kraftspeicher entgegenwirkt und somit die vom Kraftspeicher aufgebrachten Kräfte überwinden muss.

Insbesondere bei einem drehbaren Betätigungskörper ist vorzugsweise vorgesehen, dass mit der Betätigungseinrichtung der Betätigungskörper entgegengesetzt zur durch den elastischen Kraftspeicher bewirkten Drehrichtung verdreht wird.

Ein derartiger elastischer Kraftspeicher kann grundsätzlich an mehreren Orten angeordnet sein.

Konstruktiv ist es besonders günstig, wenn der elastische Kraftspeicher innerhalb der Schwenklagereinheit angeordnet ist.

Eine weitere konstruktiv günstige Lösung sieht vor, dass der elastische Kraftspeicher auf einer Seite des Betätigungskörpers angeordnet ist.

In diesem Fall lässt sich der elastische Kraftspeicher vorteilhaft mit dem Betätigungselement koppeln.

Hinsichtlich der Einwirkung auf den Betätigungskörper sind die unterschiedlichsten Lösungen denkbar.

So sieht eine vorteilhafte Lösung vor, dass die Betätigungseinrichtung ein Abtriebselement aufweist, welches mit dem Betätigungskörper gekoppelt ist.

Prinzipiell wäre es möglich, das Abtriebselement und den Betätigungskörper starr miteinander zu koppeln.

Besonders günstig ist es jedoch, wenn das Abtriebselement und der Betätigungskörper über eine Mitnahmekopplungseinrichtung miteinander gekoppelt sind, welche abhängig von der Stellung des Abtriebselements und der Stellung des Betätigungskörpers, insbesondere der Drehstellung derselben, eine Relativbewegung um einen begrenzten Drehwinkel zulässt.

Dabei könnte die Mitnahmekopplungseinrichtung ein elastisches Verbindungsglied sein.

Besonders einfach ist es jedoch, wenn die Mitnahmekopplungseinrichtung einen mitnahmefreien Freigangzustand und einen Mitnahmezustand aufweist, das heißt, dass entweder der Freigangzustand oder der Mitnahmezustand vorliegt.

Im Zusammenhang mit den bisherigen Lösungen wurden lediglich allgemein der Antrieb der Drehblockiereinrichtung erläutert, welcher es erlaubt, einen Übergang der Drehblockiereinrichtung von mindestens einer Drehblockierstellung in eine Lösestellung und umgekehrt zu realisieren.

Ferner ist vorzugsweise vorgesehen, dass die Betätigungseinrichtung für die Drehblockiereinrichtung eine motorische Antriebseinheit umfasst.

Dabei könnte eine ausschließlich der Betätigungseinrichtung für die Drehblockiereinrichtung zugeordnete motorische Antriebseinheit vorgesehen sein.

Ferner ist vorzugsweise vorgesehen, dass das Untersetzungsgetriebe auf einer dem motorischen Antrieb zugewandten Seite des Betätigungselements der Drehblockiereinrichtung angeordnet ist.

Für den kompakten Aufbau ist es besonders förderlich, wenn in Richtung der Schwenkachse gesehen, das Untersetzungsgetriebe auf einer Seite von der motorischen Antriebseinheit angetrieben ist und auf der gegenüberliegenden Seite einen Abtrieb für das Betätigungselement aufweist.

Somit ist vorzugsweise das Untersetzungsgetriebe in Richtung der Schwenkachse gesehen zwischen der motorischen Antriebseinheit und dem Betätigungselement angeordnet.

Ferner sind vorzugsweise das Untersetzungsgetriebe, der elastische Kraftspeicher und das Betätigungselement in Richtung der Schwenkachse aufeinanderfolgend, insbesondere innerhalb der Schwenklagereinheit, angeordnet.

Um ferner sicherzustellen, dass der Betätigungskörper trotz Beaufschlagung durch den elastischen Kraftspeicher nicht seine Drehblockierstellung verlässt, ist vorzugsweise vorgesehen, dass der Betätigungskörper durch eine Sicherungseinrichtung in seiner Drehstellung blockierbar ist.

Insbesondere ist dabei vorgesehen, dass der Betätigungskörper durch die Sicherungseinrichtung gegen ein Erreichen seiner Lösestellung blockierbar ist, um sicherzustellen, dass der Betätigungskörper niemals selbstständig, beispielsweise bei einem Bruch des diesen in Richtung seiner aktiven Stellung beaufschlagenden elastischen Kraftspeichers, die Lösestellung der Drehblockierkörper zulässt.

Eine derartige Sicherungseinrichtung ist so ausgebildet, dass diese eine Einwirkung erfordert, um die Blockierung des Betätigungskörpers aufzuheben.

Aus diesem Grund ist zweckmäßigerweise vorgesehen, dass die Betätigungseinrichtung für die Drehblockiereinrichtung mit der Sicherungseinrichtung gekoppelt ist, so dass über die Betätigungseinrichtung auch ein Lösen der Blockierung des Betätigungskörpers durch die Sicherungseinrichtung erfolgen kann.

Vorzugsweise ist dabei die Sicherungseinrichtung derart mit der Betätigungsvorrichtung gekoppelt, dass die Sicherungseinrichtung eine nicht durch eine Betätigung ausgelöste Bewegung des Betätigungskörpers blockiert.

Insbesondere ist die Sicherungseinrichtung so ausgebildet, dass sie bei nichtbetätigter Betätigungsvorrichtung eine Bewegung des Betätigungskörpers in seine Lösestellung blockiert.

Eine zweckmäßige Lösung sieht dabei vor, dass das Antriebselement der Betätigungsvorrichtung, beispielsweise das Abtriebselement des Untersetzungsgetriebes, mit der Sicherungseinrichtung gekoppelt ist.

Zweckmäßigerweise lässt sich dabei das Abtriebselement, beispielsweise das Abtriebselement des Untersetzungsgetriebes, derart ausbilden, dass über das Abtriebselement die Einwirkung auf den Betätigungskörper und die Einwirkung auf die Sicherungseinrichtung aufeinander abgestimmt sind, so dass eine Betätigung der Betätigungsvorrichtung einerseits dazu führt, dass die Blockierung des Betätigungskörpers aufgehoben wird und andererseits dazu führt, dass der Betätigungskörper von der aktiven Stellung in die inaktive Stellung bewegt wird.

Beispielsweise ist hierzu vorgesehen, dass das Abtriebselement im Zuge seiner Bewegung von der Ausgangsstellung in eine Zwischenstellung die Sicherungseinrichtung von der Sicherungsstellung in die Entsicherungsstellung überführt.

Hinsichtlich der Kopplung zwischen dem Abtriebselement und der Sicherungseinrichtung sind die unterschiedlichsten Möglichkeiten denkbar.

Beispielsweise wäre jede Art von Kopplung, beispielsweise auch über eine elektrische Steuerung denkbar.

Eine aufgrund ihrer Einfachheit besonders zweckmäßige Lösung sieht dabei vor, dass das Abtriebselement und die Sicherungseinrichtung über eine mechanische Kopplungseinrichtung miteinander gekoppelt sind.

Die mechanische Kopplungseinrichtung ist günstigerweise so ausgebildet, dass sie mittels einer Kulissenbahn die Einwirkung auf die Sicherungseinrichtung steuert.

Hinsichtlich der Ausbildung der Sicherungseinrichtung sind die unterschiedlichsten Lösungen denkbar.

Besonders zuverlässig arbeitet die Sicherungseinrichtung dann, wenn diese einen elastischen Kraftspeicher aufweist, welcher die Sicherungseinrichtung stets in Richtung ihrer den Betätigungskörper in der Drehblockierstellung sichernden oder blockierenden Stellung beaufschlagt.

Ferner ist vorzugsweise vorgesehen, dass die Sicherungseinrichtung ausgehend von ihrer Sicherungsstellung in eine entsicherte Stellung bewegbar ist.

Vorzugsweise erfolgt dabei ein Bewegen der Sicherungseinrichtung in die entsicherte Stellung ebenfalls durch die Abtriebseinheit für die Betätigungseinheit. Im Rahmen der erfindungsgemäßen Lösung ist vorgesehen, dass durch Bestromen eines Antriebs dieser ausgehend von einer Ausgangsstellung auf den Betätigungskörper entgegengesetzt zu einer insbesondere durch ein Federelement bewirkten Kraftbeaufschlagung desselben einwirkt, so dass dieser von der Drehblockierstellung in die Lösestellung bewegt wird.

Sobald die Lösestellung der Drehblockiereinrichtung erreicht ist, verlässt der Schwenklagerkörper die Stellung, das heißt die Arbeitsstellung oder die Ruhestellung in der dieser drehfest verriegelt war, und bewegt sich, insbesondere durch Einwirkung der Schwerkraft, in eine Zwischenstellung, wobei bereits nach dem Verlassen der Arbeitsstellung oder der Ruhestellung die Bewegung des Betätigungskörpers in die Drehblockierstellung durch die Blockierflächen blockiert ist.

Nach Verlassen der Arbeitsstellung oder Ruhestellung erfolgt daher ein Bestromen des Antriebs dergestalt, dass dieser sich wieder in die Ausgangsstellung zurückbewegt und der Betätigungskörper somit die Möglichkeit hat, dann, wenn der Schwenklagerkörper, insbesondere durch manuelle Einwirkung, die Arbeitsstellung oder Ruhestellung erreicht, aufgrund der Kraftbeaufschlagung von der Lösestellung in die Drehblockierstellung überzugehen und den Schwenklagerkörper wieder zu verriegeln.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die Anhängekupplung gemäß die in der Ruhestellung stehende Anhängekupplung gemäß Fig. 4 in Richtung der Schwenkachse;
- Fig. 6: eine Darstellung eines Schnitts längs Linie 6-6 in Fig. 3;
- Fig. 7: einen Schnitt längs Linie 7-7 in Fig. 6 in der Arbeitsstellung bei Drehblockierung durch in einer Drehblockierstellung stehende Drehblockierkörper;
- Fig. 8: eine Darstellung eines Schnitts ähnlich Fig. 7 in der Losestellung mit in eine Lösestellung verdrehtem Betätigungskörper und in Lösestellung stehenden Drehblockierkörpern;
- Fig. 9: eine Darstellung ähnlich Fig. 8 bei geringfügigem Schwenken des Schwenklagerkörpers aus der Arbeitsstellung heraus, mit unter Einwirkung der Drehfeder stehendem blockiertem Betätigungskörper;
- Fig. 10: eine Darstellung ähnlich Fig. 8 mit in Richtung der Ruhestellung weitergedrehtem Schwenklagerkörper, jedoch in der Lösestellung;
- Fig. 11: eine Darstellung ähnlich Fig. 10 mit in Richtung der Ruhestellung weitergedrehtem Schwenklagerkörper;
- Fig. 12: eine Darstellung ähnlich Fig. 11 mit in Richtung der Ruhestellung weitergedrehtem Schwenklagerkörper;
- Fig. 13: eine Darstellung ähnlich Fig. 7 in der Ruhestellung;
- Fig. 14: eine Darstellung ähnlich Fig. 8 in der Ruhestellung;
- Fig. 15: einen Schnitt längs Linie 15-15 in Fig. 6 ohne Tragplatte und Haltering;
- Fig. 16: eine perspektivische Darstellung eines Hohlrads und einer mit diesem zusammenwirkenden Antriebshülse;
- Fig. 17: eine perspektivische Explosionsdarstellung des Schwenklagerkörpers mit der Abdeckung;
- Fig. 18: einen vergrößerten Schnitt gemäß Fig. 6 in der Arbeitsstellung;
- Fig. 19: einen vergrößerten Schnitt ähnlich Fig. 18 in der Ruhestellung;
- Fig. 20: in der Ausgangsstellung;
Fig. 20a eine Draufsicht auf das Hohlrad des Planetengetriebes von Seiten der Antriebshülse;
Fig. 20b eine perspektivische Darstellung des Zusammenwirkens des Hohlrades in der Stellung gemäß Fig. 20a mit einer Sicherungseinrichtung und mit der Drehblockiereinrichtung;
- Fig. 21: in der ersten gegenüber der Ausgangsstellung gedrehten Stellung des Hohlrads zum Lösen der Sicherungseinrichtung und ohne Einwirkung auf die Drehblockiereinrichtung;
Fig. 21a eine Draufsicht auf das Hohlrad des Planetengetriebes von Seiten der Antriebshülse;
Fig. 21b eine perspektivische Darstellung des Zusammenwirkens des Hohlrades in der Stellung gemäß Fig. 21a mit einer Sicherungseinrichtung und mit der Drehblockiereinrichtung;
- Fig. 22: in einer maximal gegenüber der Ausgangsstellung gedrehten Stellung des Hohlrads ohne Einwirkung auf die Drehblockiereinrichtung;
Fig. 22a eine Draufsicht auf das Hohlrad des Planetengetriebes von Seiten der Antriebshülse;
Fig. 22b eine perspektivische Darstellung des Zusammenwirkens des Hohlrades in der Stellung gemäß Fig. 22a mit einer Sicherungseinrichtung und mit der Drehblockiereinrichtung;
- Fig. 23: in einer gegenüber der Ausgangsstellung gedrehten Stellung des Hohlrades bei Erreichen der Lösestellung der Drehblockierrichtung;
Fig. 23a eine Draufsicht auf das Hohlrad des Planetengetriebes von Seiten der Antriebshülse;
Fig. 23b eine perspektivische Darstellung des Zusammenwirkens des Hohlrades in der Stellung gemäß Fig. 23a mit einer Sicherungseinrichtung und mit der Drehblockiereinrichtung;
- Fig. 24: in einer gegenüber der Ausgangsstellung gedrehten Stellung des Hohlrades bei Erreichen der Ruhestellung des Schwenklagerkörpers;
Fig. 24a eine Draufsicht auf das Hohlrad des Planetengetriebes von Seiten der Antriebshülse;
Fig. 24b eine perspektivische Darstellung des Zusammenwirkens des Hohlrades in der Stellung gemäß Fig. 24a mit einer Sicherungseinrichtung und mit der Drehblockiereinrichtung;
- Fig. 25: in einer gegenüber der Ausgangsstellung gedrehten Stellung des Hohlrads und Deaktivieren der Ruhestellungsrasteinrichtung;
Fig. 25a eine Draufsicht auf das Hohlrad des Planetengetriebes von Seiten der Antriebshülse;
Fig. 25b eine perspektivische Darstellung des Zusammenwirkens des Hohlrades in der Stellung gemäß Fig. 25a mit einer Sicherungseinrichtung und mit der Drehblockiereinrichtung;
- Fig. 26: in einer gegenüber der Ausgangsstellung gemäß Fig. 20 gedrehten Stellung des Hohlrads bei einem Übergang der Drehblockiereinrichtung in die Drehblockierstellung;
Fig. 26a eine Draufsicht auf das Hohlrad des Planetengetriebes von Seiten der Antriebshülse;
Fig. 26b eine perspektivische Darstellung des Zusammenwirkens des Hohlrades in der Stellung gemäß Fig. 26a mit einer Sicherungseinrichtung und mit der Drehblockiereinrichtung.

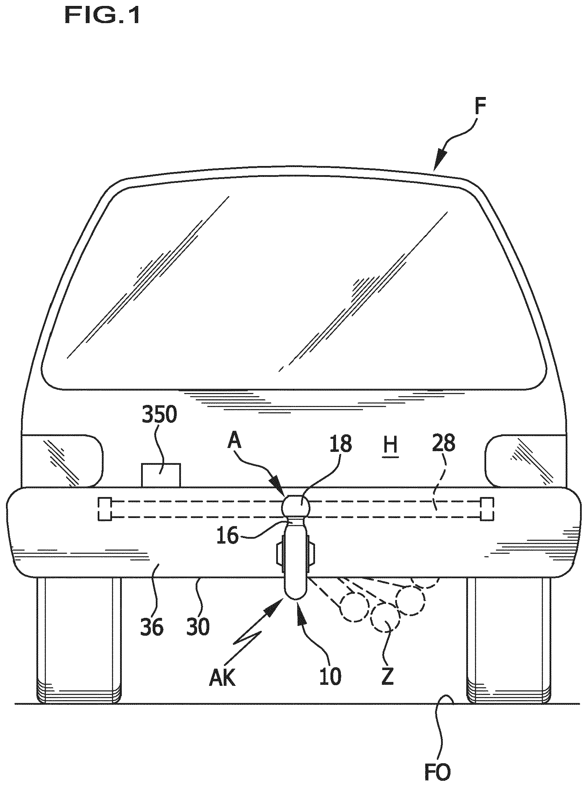

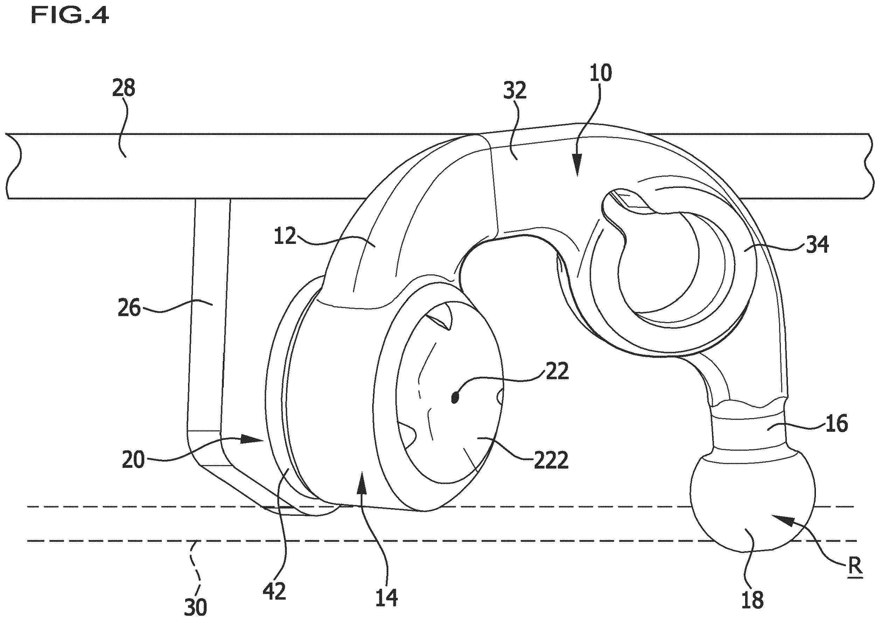

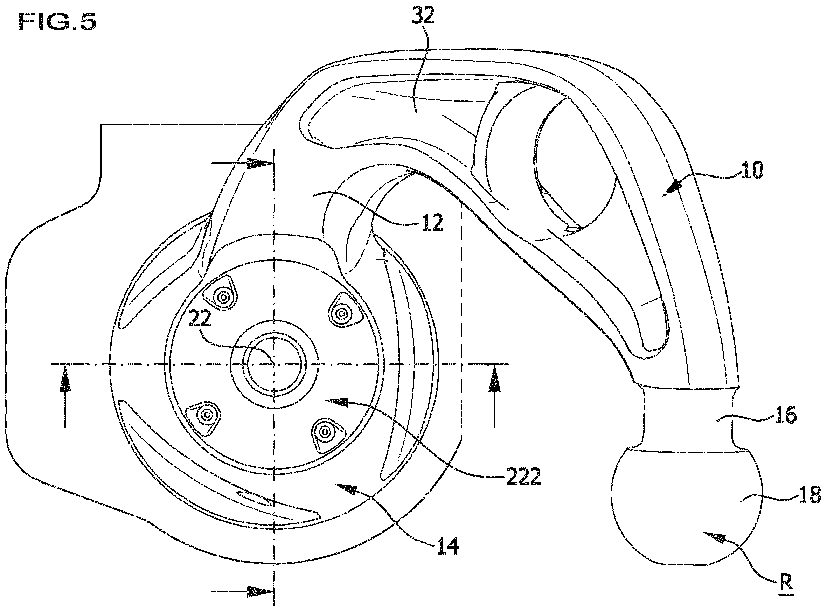

Ein erstes Ausführungsbeispiel einer erfindungsgemäßen Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

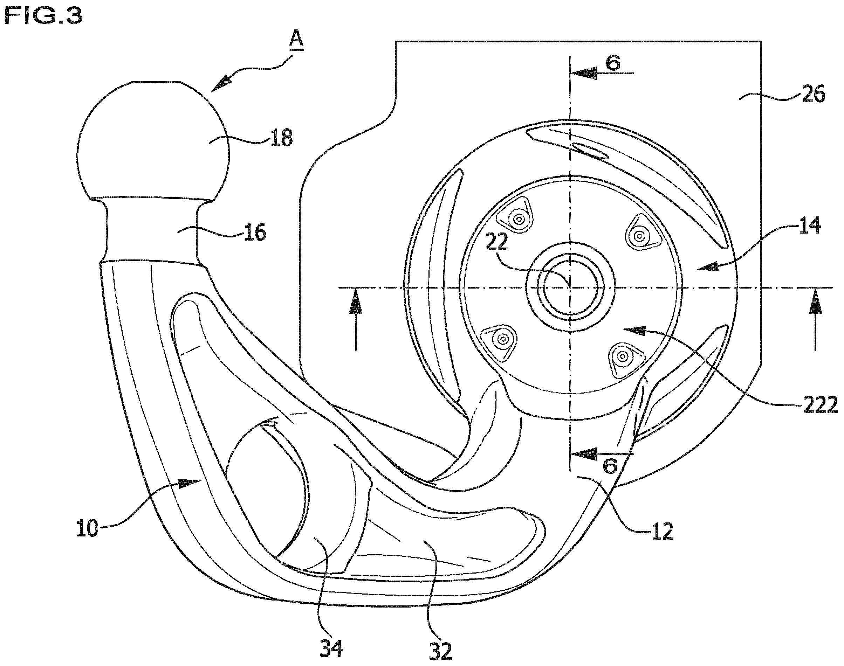

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer Fahrbahnoberfläche FO abgewandten Seite einer Unterkante 30 einer Stoßfängereinheit 36 liegen, und durch die Stoßfängereinheit 36 abgedeckt sind (Fig. 3).

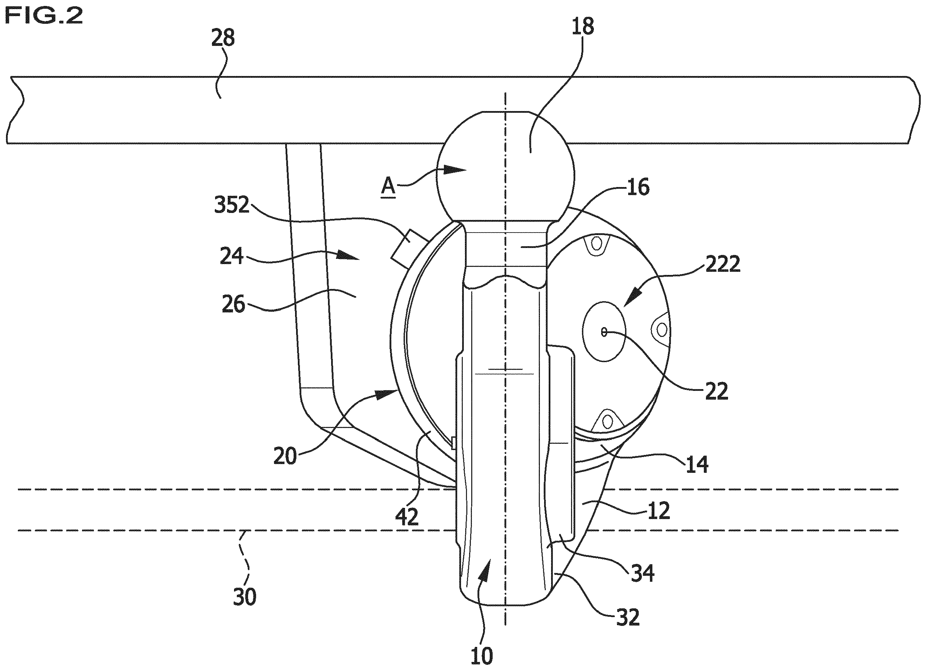

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie F abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

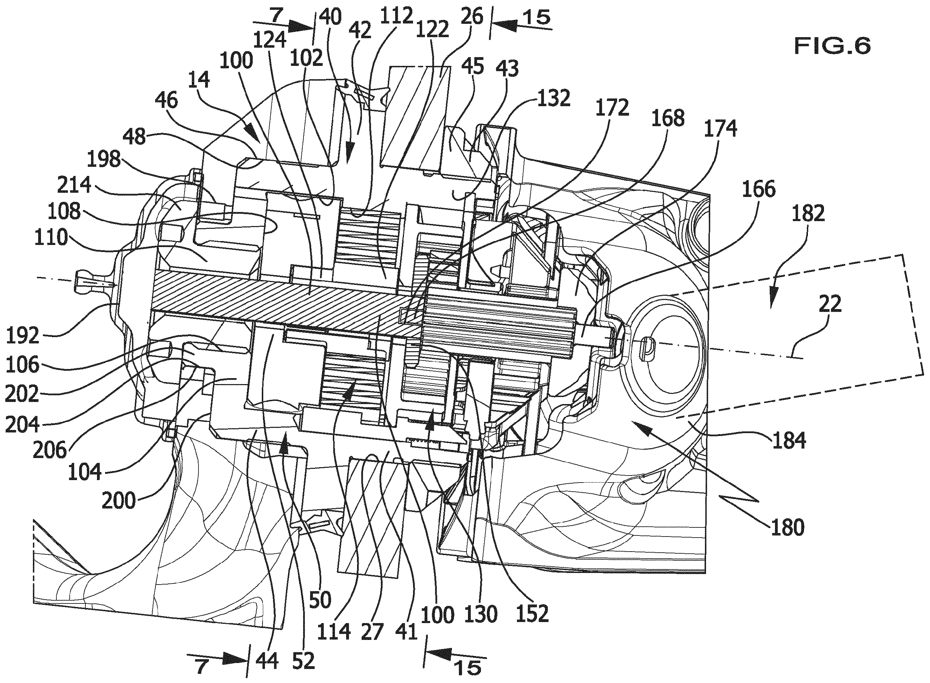

Die Schwenklagereinheit 20 umfasst, wie in Fig. 6 bis 9 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, an welcher der Schwenklagerkörper 14 drehbar gelagert ist.

Hierzu umfasst die Führungshülse 44 eine zylindrische Außenmantelfläche 46, an welcher der Schwenklagerkörper 14 mit einer zylindrischen Innenfläche 48 anliegt und dadurch um die Schwenkachse 22 eine Drehführung um die Achse 22 erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

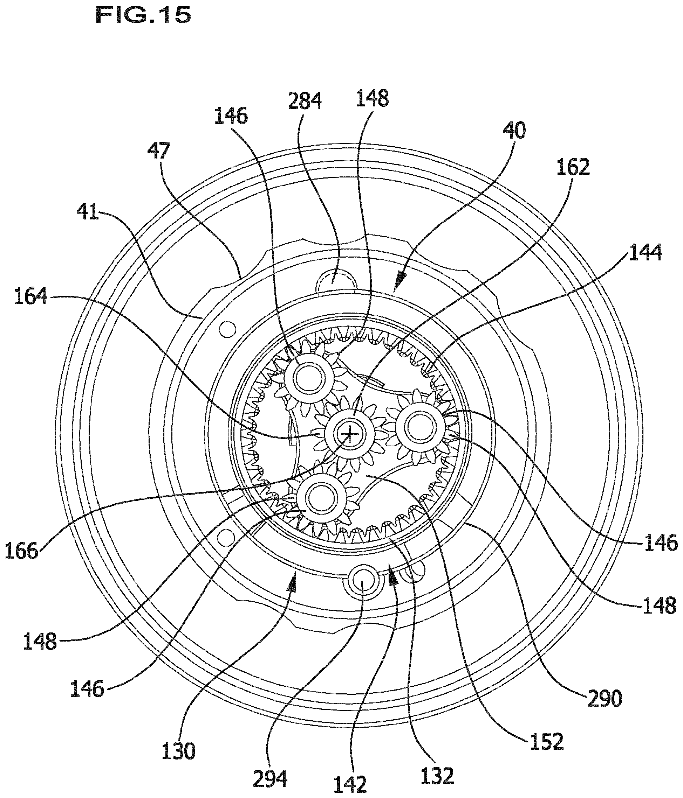

Der Führungskörper 40 umfasst außerdem einen sich durch einen Durchbruch 27 in der Tragplatte 26 erstreckenden Fortsatz 41, der eine auf einer dem Flansch 42 gegenüberliegenden Seite auf den Fortsatz 41 folgende Aufnahme 43 für einen an dieser fixierbaren Haltering 45 trägt, so dass der Führungskörper 40 durch den Fortsatz 41 aufgrund seiner nicht rotationssymmetrischen sondern mit einer radial variierenden Außenkontur 47 (Fig. 15) in dem entsprechend geformten Durchbruch 27 durch Formschluss drehfest in der Tragplatte 26 sitzt und durch den Flansch 45 sowie den Haltering 43, die auf gegenüberliegenden Seiten der Tragplatte 26 anliegen, an dieser fixiert ist.

Der Führungskörper 40 bildet somit durch seine feste Verbindung mit der Tragplatte 26 und dem Träger 24 die fahrzeugfeste Drehlagerung für den Schwenklagerkörper 14.

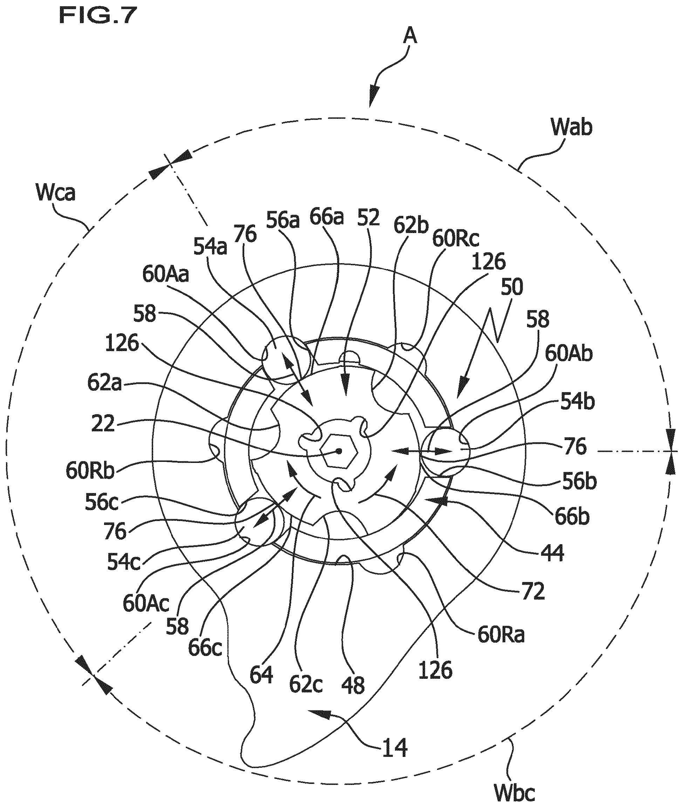

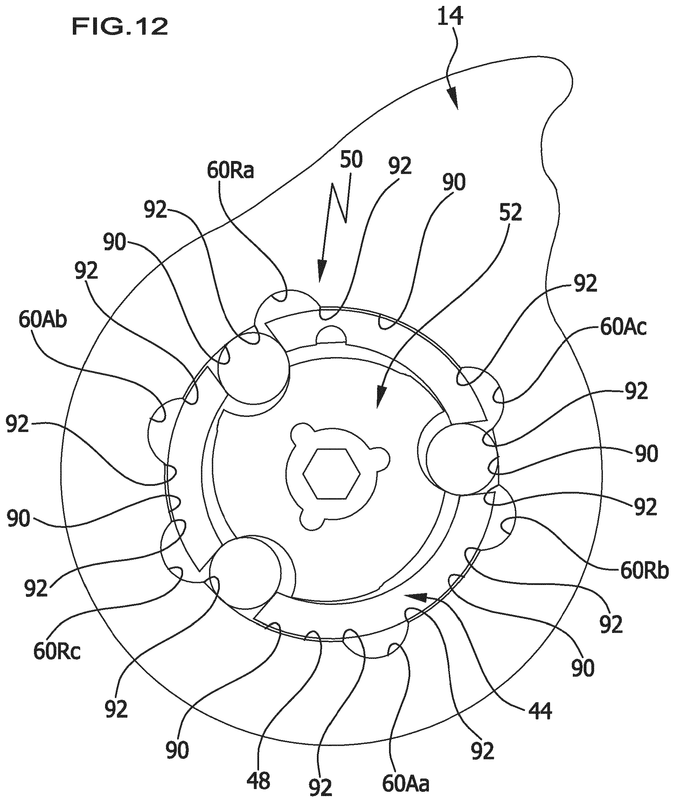

Zur Fixierung des Schwenklagerkörpers 14 in der Arbeitsstellung A ist die Schwenklagereinheit 20 mit einer als Ganzes mit 50 bezeichneten Drehblockiereinrichtung (Fig. 7 bis 14) versehen, welche einen Betätigungskörper 52, mehrere durch den Betätigungskörper 52 beaufschlagbare Drehblockierkörper 54, von denen jeder in einer Führungsaufnahme 56 der Führungshülse 44 in einer im Wesentlichen radial zur Schwenkachse 22 verlaufenden Führungsrichtung 58 bewegbar geführt sind.

Vorzugsweise sind zumindest die Drehblockierkörper 54 und die Führungsaufnahmen 56 symmetrisch zu einer senkrecht zur Schwenkachse 22 verlaufenden und die Drehblockierkörper 54 schneidenden geometrischen Ebene angeordnet, die in den Fig. 7 bis 14 der Zeichenebene entspricht.

Ferner umfasst die Drehblockiereinrichtung 50 sich ausgehend von der Innenfläche 48 des Schwenklagerkörpers 14 insbesondere in radialer Richtung zur Schwenkachse 22 in diesen hineinerstreckende Arbeitsstellungsaufnahmen 60A, mit denen die Drehblockierkörper 54 in der Arbeitsstellung A in Eingriff bringbar sind, wobei die Arbeitsstellungsaufnahmen 60A in radialer Richtung zur Schwenkachse 22 zunehmend einen geringeren Abstand voneinander aufweisende Wandflächen haben. Außerdem umfasst die Drehblockiereinrichtung 50 zusätzlich zu den Arbeitsstellungsaufnahmen 60A Ruhestellungsaufnahmen 60R, die im einfachsten Fall in gleicher Weise wie die Arbeitsstellungsaufnahmen 60A ausgebildet sind.

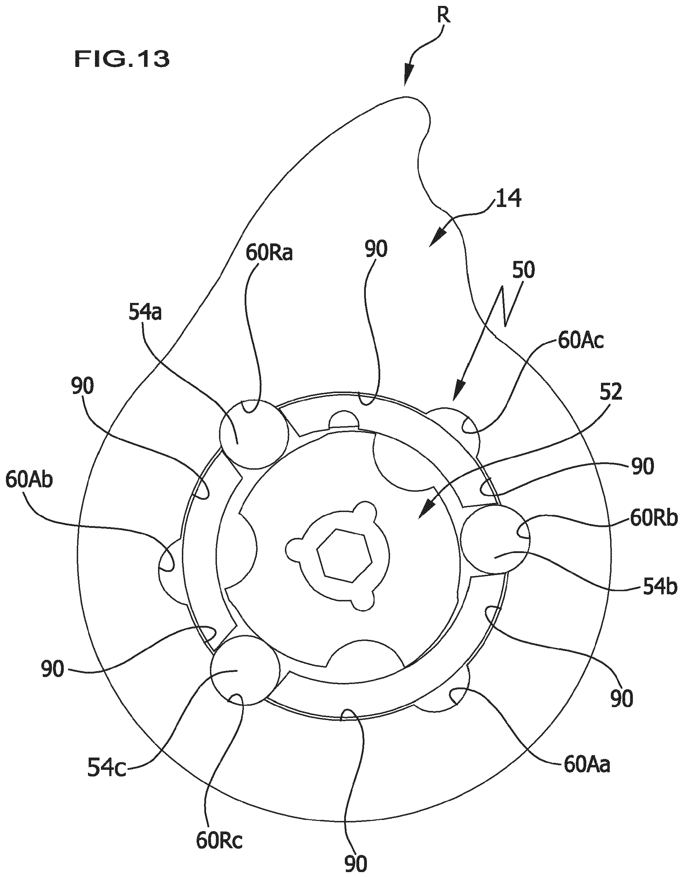

Umfasst beispielsweise die Drehblockiereinrichtung 50, wie im Zusammenhang mit Fig. 7 bis Fig. 14 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von Arbeitsstellungsaufnahmen 60Aa, 60Ab und 60Ac versehen, mit welchen die Drehblockierkörper 54a, 54b und 54c in der Arbeitsstellung A in Eingriff bringbar sind (Fig. 7), und mit einem Satz von Ruhestellungsaufnahmen 60Ra, 60Rb, 60Rc versehen, mit welchem die Drehblockierkörper 52 in der Ruhestellung R in Eingriff bringbar sind (Fig. 13).

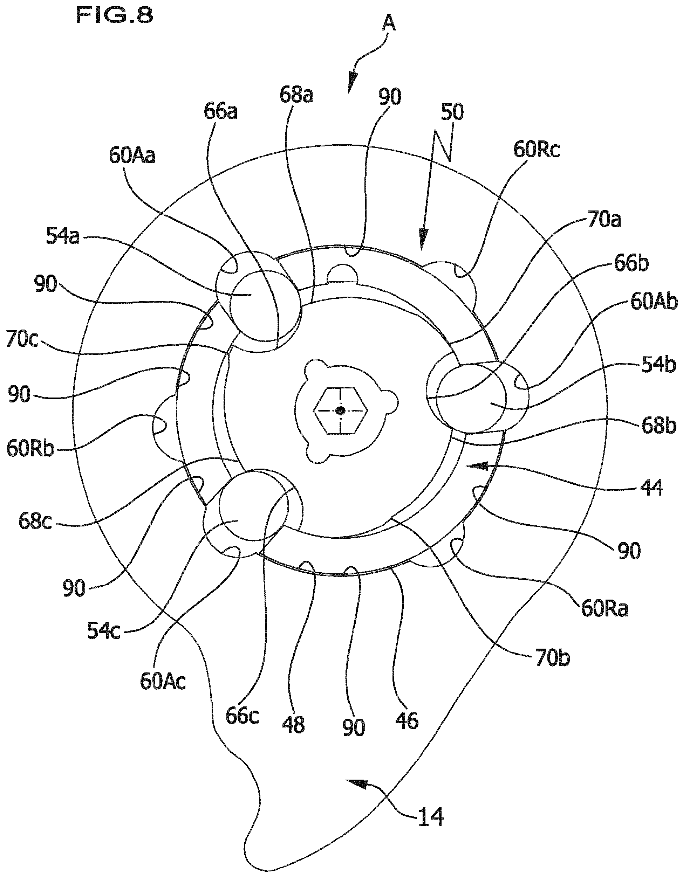

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von beispielsweise insgesamt drei, Rückzugsaufnahmen 62a, 62b und 62c und sich in einer Umlaufrichtung 64 an die jeweiligen Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können (Fig. 8), dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

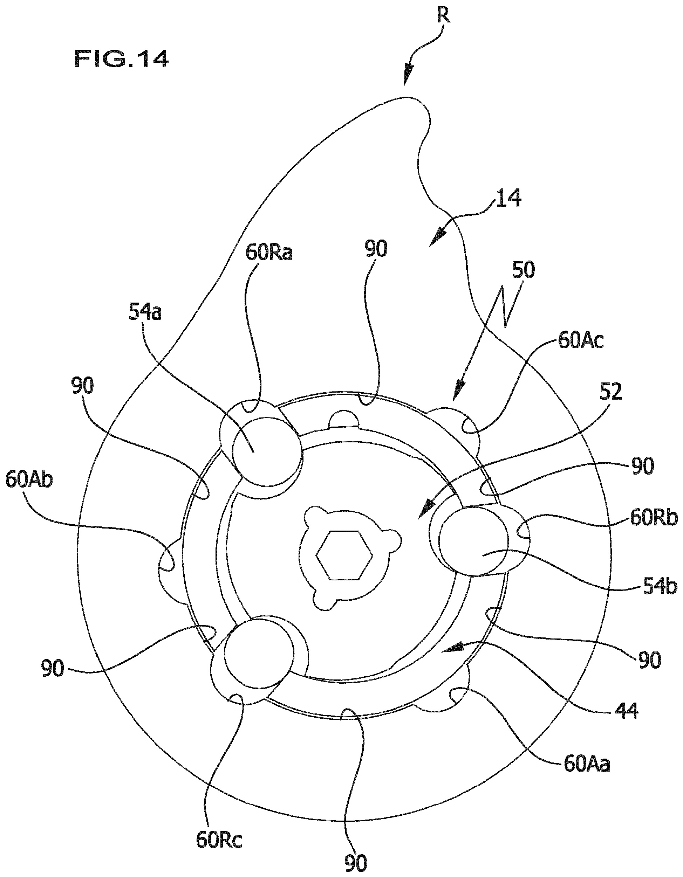

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahmen 62 eintauchen zu lassen, ist der Betätigungskörper 52 ebenfalls um die Schwenkachse 22, insbesondere koaxial zu dieser, drehbar, und zwar so, dass entweder der Satz von Rückzugsaufnahmen 62a, 62b und 62c den Drehblockierkörpern 54 zugewandt ist und diesen, wie in Fig. 8 dargestellt, in seiner inaktiven Stellung oder Lösestellung die Möglichkeit gibt, beim Übergang in die Lösestellung in die Rückzugsaufnahmen 62 in radialer Richtung zur Schwenkachse 22 hin einzutauchen, um den jeweiligen Drehblockierkörpern 54 die Möglichkeit zu eröffnen, die Arbeitsstellungsaufnahmen 60A oder die Ruhestellungsaufnahmen 60R zu verlassen und den Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 8 und Fig. 14 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörpern 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst in der aktiven Stellung oder Drehblockierstellung des Betätigungskörpers 52 auf den Anfangsbereichen 68 der Druckflächen 66 aufsitzen, dabei jedoch beispielsweise bereits in die Aufnahmen 60 eintauchen und damit in ihrer Drehblockierstellung die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend in der Arbeitsstellung A oder der Ruhestellung R des Kugelhalses 10 in die Arbeitsstellungsaufnahmen 60Aa, 60Ab und 60Ac, Fig. 7, oder in die Ruhestellungsaufnahmen 60Ra, 60Rb und 60Rc, Fig. 13, hinein, um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 7 und Fig. 13 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 so in der Führungshülse 44 gelagert, dass sich der Betätigungskörper 52 aufgrund des radialen Spiels relativ entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Arbeitsstellungsaufnahmen 60Aa, 60Ab und 60Ac oder die Ruhestellungsaufnahmen 60Ra, 60Rb und 60Rc, so dass auch die auf den Betätigungskörper 52 wirkenden Reaktionskräfte ungefähr gleich groß sind. Vorzugsweise sind die Drehblockierkörper 54 als Kugeln ausgebildet, die somit einerseits an den Betätigungskörper 52 und andererseits auch an den Aufnahmen 60 anliegen.

Somit erfolgt nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält, in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 114 beaufschlagt (Fig. 6), die einerseits auf den Betätigungskörper 52 wirkt und andererseits radial außenliegend an dem Führungskörper 40 abgestützt ist.

Die Drehfeder 114 bewirkt auch, dass der Betätigungskörper 52 die Drehblockierkörper 54 kraftbeaufschlagt in die Arbeitsstellungsaufnahmen 60A oder die Ruhestellungsaufnahmen 60R drückt und somit wird der Schwenklagerkörper 14 spielfrei fixiert, wobei die Spielfreiheit auch bei sich aufgrund der Belastungen im Betrieb verändernden Geometrie der Arbeitsstellungsaufnahmen 60A oder der Ruhestellungsaufnahmen 60R durch ein Weiterdrehen des Betätigungskörpers 52 in der Drehrichtung 72 aufrechterhalten wird.

Die beispielsweise drei Führungsaufnahmen 56 und die in diesen angeordneten Drehblockierkörper 54, sowie die diesen Drehblockierkörpern 54 jeweils zugeordneten Rückzugsaufnahmen 62 mit den sich an diese anschließenden Druckflächen 66 im Betätigungskörper 52 bilden jeweils drei Drehblockiereinheiten 80 und diese sind um die Schwenkachse 22 herum in ungleichen Winkelabständen Wab, Wbc, Wca (bezogen auf die jeweiligen Mittelachsen Ma, Mb, Mc) relativ zueinander angeordnet, wodurch, bezogen auf die Schwenkachse 22 als Drehachse, eine Drehblockierkonfiguration der Drehblockiereinheiten 80 nur bei einer Drehung der Drehblockierkonfiguration um 360° zu einer deckungsgleichen Anordnung der Drehblockiereinheiten 80 führt.

Beispielsweise beträgt der Winkelabstand Wab = 120°, der Winkelabstand Wbc = 137° und der Winkelabstand Wca = 103°, das heißt, dass die Abweichung von gleichen Winkelabständen 17° beträgt.

Es sind bei beispielsweise drei Drehblockiereinheiten insbesondere aber auch Abweichungen von gleichen Winkelabständen von bis zu 30° oder mehr möglich, so dass beispielsweise Winkelabstände von Wab = 120°, Wbc = 150° und Wca = 90° möglich sind.

Desgleichen sind jeweils die Arbeitsstellungsaufnahmen 60A und die Ruhestellungsaufnahmen 60R relativ zueinander bezogen auf die Schwenkachse 22 jeweils in einer Aufnahmenkonfiguration mit denselben Winkelabständen wie die Drehblockiereinheiten 80 relativ zueinander angeordnet, die bezogen auf die Schwenkachse 22 ebenfalls nur bei einer Drehung um 360° zu einer deckungsgleichen Anordnung der jeweiligen Aufnahmenkonfiguration führen, so dass diese in der Arbeitsstellung A beziehungsweise der Ruhestellung R deckungsgleich zu der Drehblockierkonfiguration ist, so dass in der Arbeitsstellung A beziehungsweise der Ruhestellung R, jeweils ein Drehblockierkörper 54 einer der Drehblockiereinheiten 80 einer der Arbeitsstellungsaufnahmen 60A beziehungsweise einer der Ruhestellungsaufnahmen 60R gegenübersteht und in der Drehblockierstellung mit dieser in Eingriff kommen kann, wie in Fig. 7 und Fig. 13 dargestellt, wodurch der Schwenklagerkörper 14 drehfest relativ zur Schwenklagereinheit 20 fixiert ist (Fig. 7, Fig. 13).

Wird jedoch der Betätigungskörper 52 in der Arbeitsstellung A oder der Ruhestellung R gegen die Kraftwirkung der Drehfeder 114 in die Lösestellung bewegt, wie nachfolgend beschrieben, so hat jeder der Drehblockierkörper 54 der jeweiligen Drehblockiereinheit 80 die Möglichkeit in die dieser zugeordneten Rückzugsaufnahme 62 einzutauchen, und die jeweilige Arbeitsstellungsaufnahme 60A oder Ruhestellungsaufnahme 60R zu verlassen, so dass der Schwenklagerkörper 14 um die Schwenkachse 22 auf der Arbeitsstellung A oder der Ruhestellung R heraus schwenkbar ist (Fig. 8, Fig. 14).

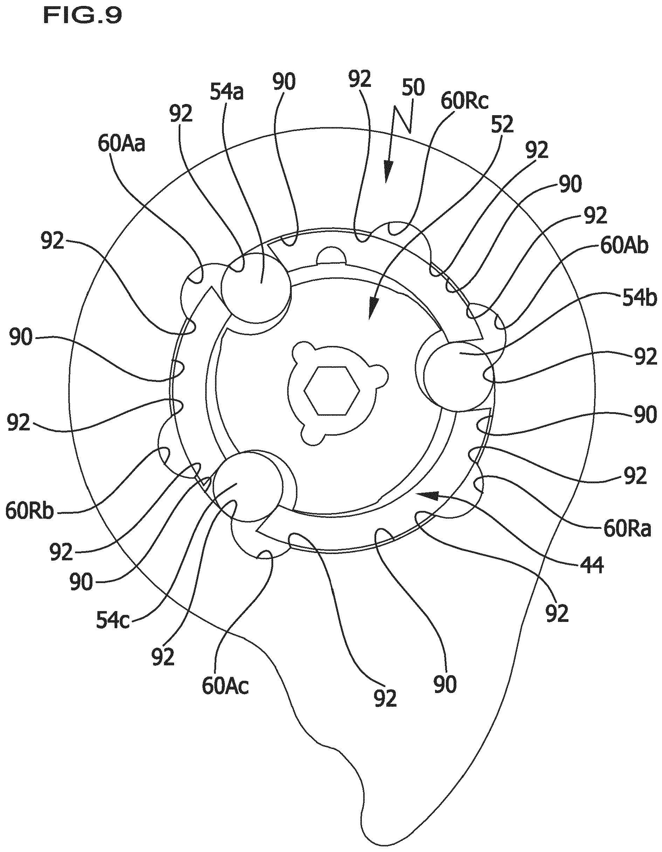

Sobald der Schwenklagerkörper 14 die Arbeitsstellung A oder die Ruhestellung R verlassen hat (Fig. 9), hat die zur Schwenkachse 22 in der Drehblockierkonfiguration angeordnete Gesamtheit der Drehblockiereinheiten 80 in allen Schwenkstellungen zwischen der Arbeitsstellung A oder der Ruhestellung R nicht mehr die Möglichkeit mit der in der jeweiligen Aufnahmenkonfiguration angeordneten Gesamtheit der Arbeitsstellungsaufnahmen 60A oder Ruhestellungsaufnahmen 60R in Eingriff zu kommen, so dass, dann wenn eine Beaufschlagung des Betätigungskörpers 54 in der Drehrichtung 72 erfolgt, die Gesamtheit der in den Rückzugsaufnahmen 62 sitzenden Drehblockierkörper 54 nicht mehr in die Gesamtheit der Arbeitsstellungsaufnahmen 60A oder der Ruhestellungsaufnahmen 60R eingreifen kann, da die Drehblockierkörper 54 zwar durch den durch die Drehfeder 114 in der Drehrichtung 72 beaufschlagten Betätigungskörper 52, insbesondere durch die schräg zur Führungsrichtung 58 verlaufenden gewölbten Grundflächen der Rückzugsaufnahmen 62, in Richtung des Schwenklagerkörpers 14 beaufschlagt werden können, jedoch in jeder der außerhalb der Arbeitsstellung A liegenden Drehstellungen des Schwenklagerkörpers 14 niemals der Gesamtheit der Drehblockierkörper 54 jeweils eine Aufnahme aus der Gesamtheit der Arbeitsstellungsaufnahmen 60A oder der Ruhestellungsaufnahmen 60R gegenübersteht und somit stets mindestens einer der Drehblockierkörper 54 durch eine von zwischen den Arbeitsstellungsaufnahmen 60A und Ruhestellungsaufnahmen 60R verlaufenden, im einfachsten Fall durch die zylindrische Innenfläche 48 des Schwenklagerkörpers 14 gebildeten, Blockierflächen 90 blockiert ist und dadurch eine durch die Drehfeder 114 bewirkte Drehung des Betätigungskörpers 52 in der Drehrichtung 72 verhindert, so dass der Betätigungskörper 52 dadurch auch bei Einwirkung der Drehfeder 114 in der Drehrichtung 72 in allen Schwenkstellungen des Schwenklagerkörpers 14 außerhalb der Arbeitsstellung A und der Ruhestellung R in der Lösestellung gehalten wird und folglich erst wieder bei Erreichen der Arbeitsstellung A in die Drehblockierstellung übergehen kann.

Vorzugsweise ist die Abweichung der Drehblockierkonfiguration der Drehblockiereinheit 80 und die Aufnahmekonfiguration der Aufnahmen 60 von einer symmetrischen Ausbildung so groß, dass dann wenn eine der Drehblockiereinheiten 80 einer der Arbeitsstellungsaufnahmen 60A oder der Ruhestellungsaufnahmen 60R gegenübersteht, so dass der Drehblockierkörper 54 mit dieser Arbeitsstellungsaufnahme 60A oder der Ruhestellungsaufnahmen 60R in Eingriff kommen könnte, mindestens eine, noch besser mindestens zwei, Drehblockiereinheiten 80 relativ zu der nächstliegenden Aufnahme der Arbeitsstellungsaufnahme 60A oder der Ruhestellungsaufnahmen 60R soweit in Drehrichtung versetzt sind, dass ein Berührpunkt des dieser Drehblockiereinheit 80 zugeordneten Drehblockierkörpers 54 bereits auf einer der Blockierflächen 90 liegt und nicht im Bereich einer der Aufnahmen 60 zum Liegen kommen kann, so dass eine zuverlässige Blockierung des Betätigungskörpers 52, insbesondere dann, wenn der Betätigungskörper 52 durch die Drehfeder 114 in der Drehrichtung 72 beaufschlagt ist, durch die in der Lösestellung wirksamen Blockierflächen 90 gewährleistet ist.

Wenn auf den Betätigungskörper 52 mit einer Drehrichtung 64 entgegengesetzt zur Wirkung der Drehfeder 114 eingewirkt und dieser maximal verdreht wird, so liegen die Drehblockierkörper 54 in allen Schwenkstellungen des Schwenklagerkörpers 14 mit Spiel zwischen der jeweiligen Blockierfläche 90 und den Rückzugsaufnahmen 62.

Wenn jedoch die Wirkung der Drehfeder 114 in der Drehrichtung 72 dominiert, so liegen auch beim Verschwenken zwischen der Arbeitsstellung A und der Ruhestellung R in den jeweiligen Schwenkstellungen des Schwenklagerkörpers 14 Verhältnisse vor, wie sie in Fig. 9 bis 12 dargestellt sind.

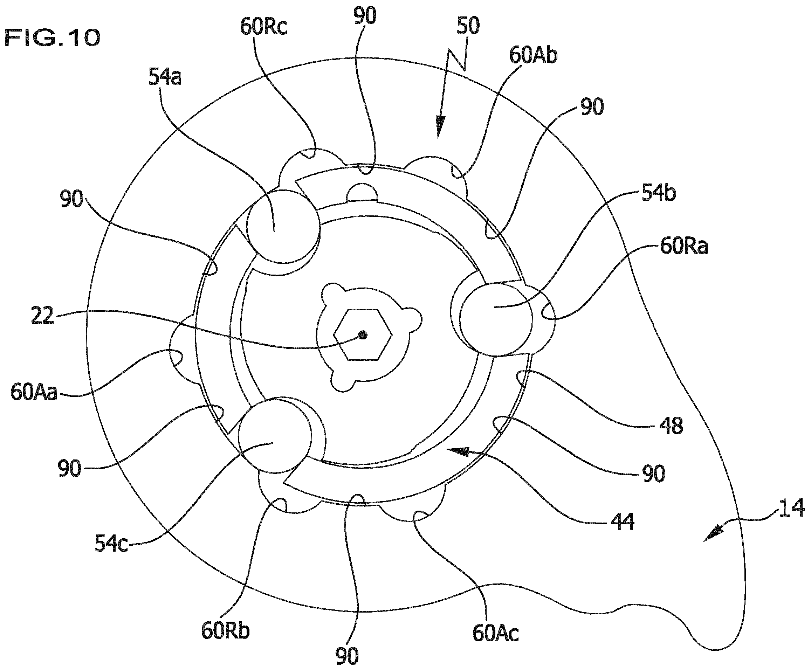

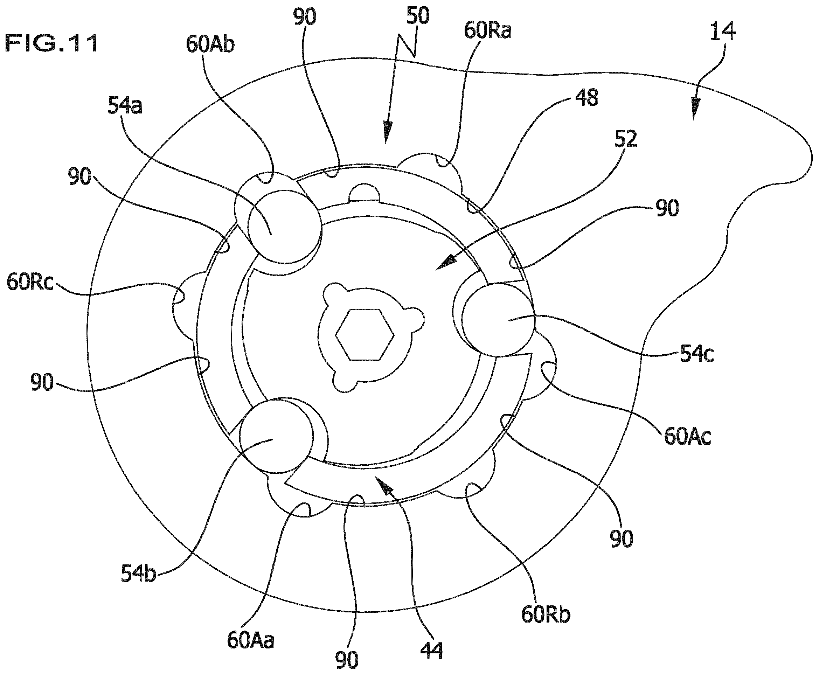

Die Fig. 9 bis 12 zeigen, dass der Betätigungskörper 52 in jeder der Schwenkstellungen des Schwenklagerkörpers 14 durch mindestens einen, vorzugsweise zwei, Drehblockierkörper 54, die an einer der Blockierflächen 90 anliegen, in der Lösestellung gehalten wird, und verhindern, dass einer der Drehblockierkörper 54, beispielsweise der Drehblockierkörper 54b in Fig. 10 oder der Drehblockierkörper 54a in Fig. 11, in die jeweils mit diesem fluchtenden Aufnahme 60 eingreifen kann.

In jedem Fall liegen die Verhältnisse gemäß Fig. 7 bis 14 beim Verschwenken zwischen der Ruhestellung R und der Arbeitsstellung A vor, wobei durch das Anliegen der Drehblockierkörper 54 an den Blockierflächen 90 gemäß Fig. 9 bis 12 beim Verschwenken zwischen der Ruhestellung R und der Arbeitsstellung A die Drehblockierkörper 54 bei geringer Geräuschentwicklung von den Blockierflächen 90 über sich unmittelbar und insbesondere stufenlos an diese anschließende Öffnungsränder 92 der Arbeitsstellungsaufnahmen 60A und der Ruhestellungsaufnahmen 60R in die Arbeitsstellungsaufnahmen 60A oder die Ruhestellungsaufnahmen 60R gleiten und in die Drehblockierstellung gemäß Fig. 7 oder Fig. 13 übergehen.

Die Führungshülse 44 erstreckt sich vorzugsweise mit einem eine Aufnahme 102 für den Betätigungskörper 52 bildenden Abschnitt zwischen dem Flansch 42 und einem die Führungshülse 44 abschließenden sich radial zur Schwenkachse 22 hin erstreckenden Flansch 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Flansches 104 geführt ist.

Der Flansch 104 weist ferner noch eine zur Schwenkachse 22 koaxiale Aufnahme 106 auf, in welcher ein von einer stehenden Welle 100 durchsetzter Einsatz 110 eingesetzt, insbesondere eingeschraubt, ist, der in der Aufnahme 106 sitzt und die Welle 100 relativ zur Führungshülse 44 drehfest fixiert.

Auf einer dem Flansch 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 die Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

Hierzu ist die Antriebshülse 122, wie in den Fig. 6, 7 und 16 dargestellt, beispielsweise mit Fortsätzen 124 versehen, die zur Herstellung einer Formschlussverbindung in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers 52 in der Drehrichtung 72, so dass der Betätigungskörper 52 bei ungehinderter Einwirkung der Drehfeder 114 auf die Antriebshülse 122 den Betätigungskörper 52 stets in der Drehrichtung 72 beaufschlagt, so dass dieser die Tendenz hat die Drehblockierkörper 54 kraftbeaufschlagt in der Führungsrichtung 58 radial von der Schwenkachse 22 weg nach außen zu bewegen, wobei diese Bewegung durch die Blockierflächen 90 in allen vorgesehenen Schwenkstellungen des Schwenklagerkörpers 14, mit Ausnahme der Arbeitsstellung A und der Ruhestellung R, verhindert wird und folglich nur in der Arbeitsstellung A und der Ruhestellung R die Drehblockierkörper 54 in die Arbeitsstellungsaufnahmen A und die Ruhestellungsaufnahmen R gedrückt werden und somit der Schwenklagerkörper 14 relativ zur Führungshülse 44 drehfest und insbesondere spielfrei fixiert wird.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 mittels eines als Ganzes mit 130 bezeichneten Planetengetriebes 130 antreibbar (Fig. 6), welches in einer Getriebeaufnahme 132 der Führungshülse 44, insbesondere koaxial zur Schwenkachse 22, angeordnet ist, welche beispielsweise teilweise innerhalb des Durchbruchs 27 der Trägerplatte 26 angeordnet ist und vorzugsweise sich auf einer dem Flansch 42 gegenüberliegenden Seite von dem Durchbruch 27 der Trägerplatte 26 weg erstreckt.

Das Planetengetriebe 130 (Fig. 15) umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der stehenden Welle 100 verbunden ist.

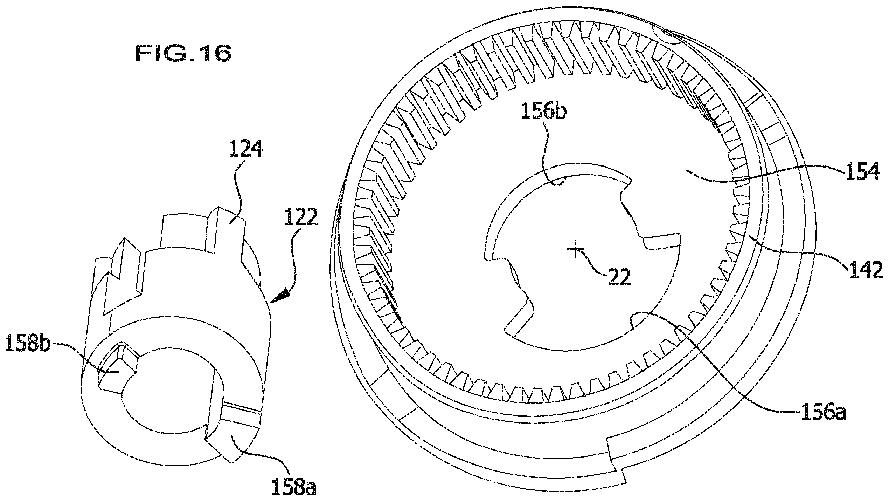

Ferner umfasst - wie in Fig. 16 dargestellt - das Hohlrad 142 einen zwischen dem Planetenradträger 152 und der Drehfeder 114 liegenden Flanschkörper 154, welcher sich ebenfalls in Richtung der Welle 100 erstreckt, diese umschließt, jedoch relativ zu dieser drehbar ist und einen Abtrieb des Planetengetriebes 130 zum Betätigen der Drehblockiereinrichtung 50 bildet.

Wie in Fig. 16 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Planetengetriebes 130, das auf einer als Ganzes mit 166 bezeichneten Antriebswelle sitzt, die koaxial zur Schwenkachse 22 angeordnet ist und beispielsweise mittels eines endseitigen Wellenstummels 168, der in eine stirnseitige Bohrung 172 der stehende Welle 100 eingreift, relativ zur Schwenkantriebswelle 100 frei drehbar, jedoch koaxial zu dieser gelagert ist.

Die Antriebswelle 166 trägt im Abstand von dem Planetengetriebe 130 ein Antriebszahnrad 174, beispielsweise ein Kegelzahnrad, welches von einem Abtriebszahnrad einer motorischen Antriebseinheit 182 angetrieben ist, die beispielsweise einerseits einen Antriebsmotor, vorzugsweise einen Elektromotor, und andererseits ein Untersetzungsgetriebe zum Antreiben des Antriebszahnrads umfasst.

Die Antriebseinheit 182 ist beispielsweise an einem Abdeckkörper 184 gehalten, welcher ausgehend von der Trägerplatte 126 die Antriebswelle 166 mit dem Antriebszahnrad 174 sowie das mit diesem kämmende Abtriebszahnrad übergreift und außerdem noch die Antriebswelle 166 auf einer dem Wellenstummel 168 abgewandten Seite lagert.

Somit bilden das Planetengetriebe 130 und die Antriebseinheit 182 beispielsweise eine Betätigungseinrichtung 180 für die Drehblockiereinrichtung 50.

Die mit dem Planetenradträger 152 drehfest gekoppelte stehende Welle 100 ist mit dem Flansch 104 des Führungskörpers 40 drehfest verbunden.

Ein Endflansch 198 des Schwenklagerkörpers 14 übergreift dabei den Flansch 104 des Führungskörpers 40 in dem außenliegenden Bereich 200 und erstreckt sich bis zu einem Führungsansatz 202 des Flansches 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 koaxial zur Schwenkachse 22 geführt ist.

Darüber hinaus erstreckt sich in der Aufnahme 106 des Führungsansatzes 202 ein Gewinde 212, in welchem der Einsatz 110 fixiert, insbesondere eingeschraubt, ist, der mit einem Außenflansch 214 den Endflansch 198 partiell in einem radial innenliegenden Bereich übergreift, so dass der Endflansch 198 des Schwenklagerkörpers 14 axial unverschiebbar zwischen dem Flansch 104 und dem Außenflansch 214 des Einsatzes 110 und somit relativ zum Führungskörper 40 axial unverschiebbar geführt ist.

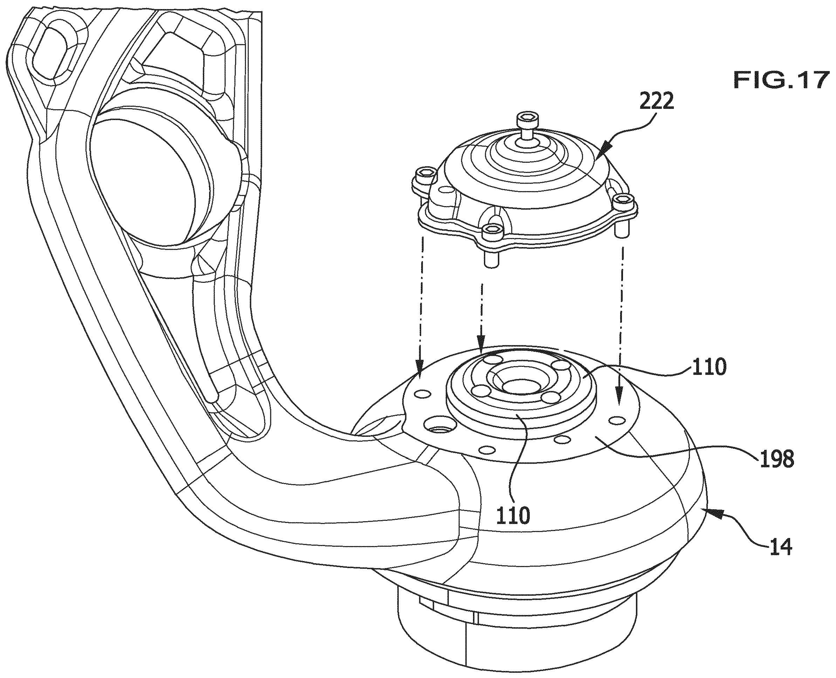

Auf dem Endflansch 198 ist ferner eine Abdeckung 222 drehfest montiert, so dass die Abdeckung 222 mit dem Schwenklagerkörper 14 eine Einheit bildet, die um die Schwenkachse 22 drehbar ist (Fig. 17).

Die Abdeckung 222 sitzt dabei auf dem Endflansch 198 auf, und ist auf diesem drehfest fixiert.

Bei der vorstehend beschriebenen Lösung ist ein Satz von Arbeitsstellungsaufnahmen 60A für die drehfeste Festlegung des Schwenklagerkörpers 14 in der Arbeitsstellung A vorgesehen, sowie ein Satz von Ruhestellungsaufnahmen 60R für die drehfeste Festlegung des Schwenklagerkörpers 14 in der Ruhestellung R.

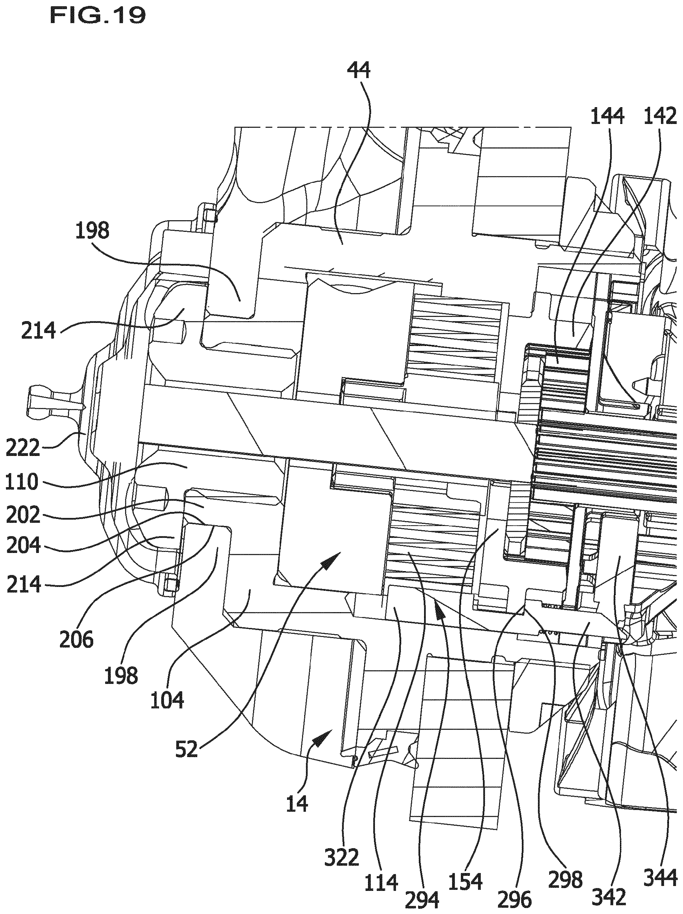

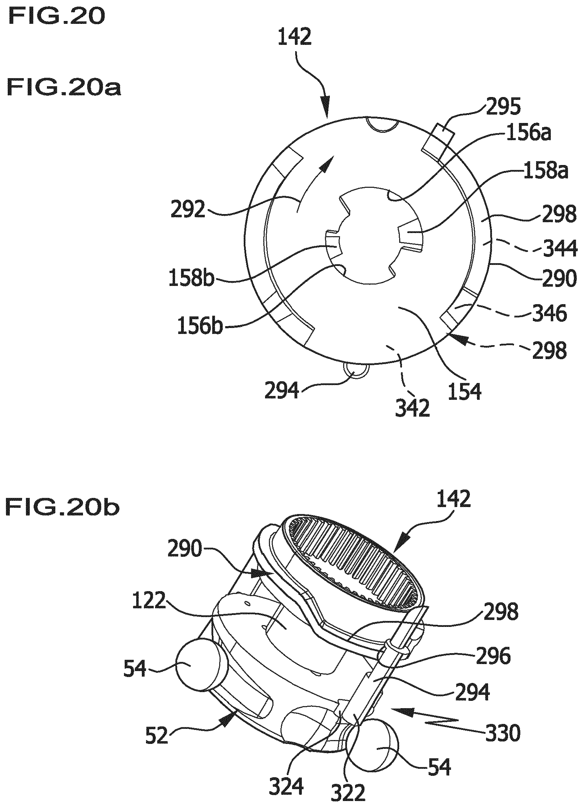

Die Fig. 20 bis 26 zeigen das Zusammenwirken der Drehbewegung des Hohlrades 142 ausgehend von einer in der Ausgangsstellung vorliegenden Ruhestellung bei Drehung in einer Drehrichtung 292 mit der Antriebshülse 122 zum Antreiben des Betätigungskörpers 52 mittels der Antriebsschlitze 156a und 156b, die in dem Flanschkörper 154 des Hohlrades 142 angeordnet sind, mit den in diese Antriebsschlitze 156a, 156b eingreifenden Antriebsfingern 158a, 158b sowie mit einem Sicherungsstift 294, der mit einer ebenfalls von dem Kulissenflansch 290 gebildeten Kulissenbahn 298 zusammenwirkt und diese Kulissenbahn 298 mittels einer Abtastfläche 296 abtastet (Fig. 19) wie nachfolgend noch im Detail erläutert.

Erfolgt in der in Fig. 20 dargestellten Arbeitsstellung A als Ausgangsstellung nun ein Antreiben des Hohlrades 142 mittels des Planetengetriebes 130, so dreht sich das Hohlrad 142 in der Drehrichtung 292.

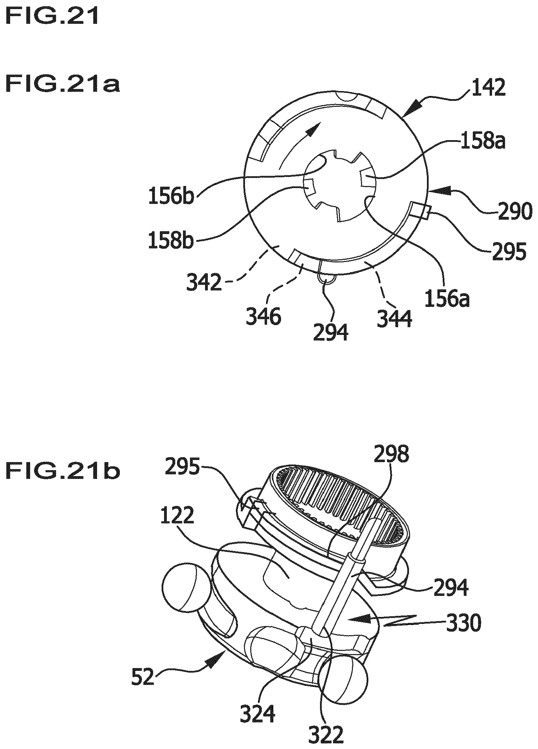

Wie in Fig. 21a erkennbar, erfolgt die Drehung des Hohlrades 142 mit dem Kulissenflansch 290 zunächst ohne dass ein Antrieb der Antriebshülse 122 erfolgt, da die Antriebsschlitze 156a, 156b eine derartige Relativdrehung des Hohlrades relativ zu den Antriebsfingern 158a, 158b erlauben, ohne diese mitzudrehen.

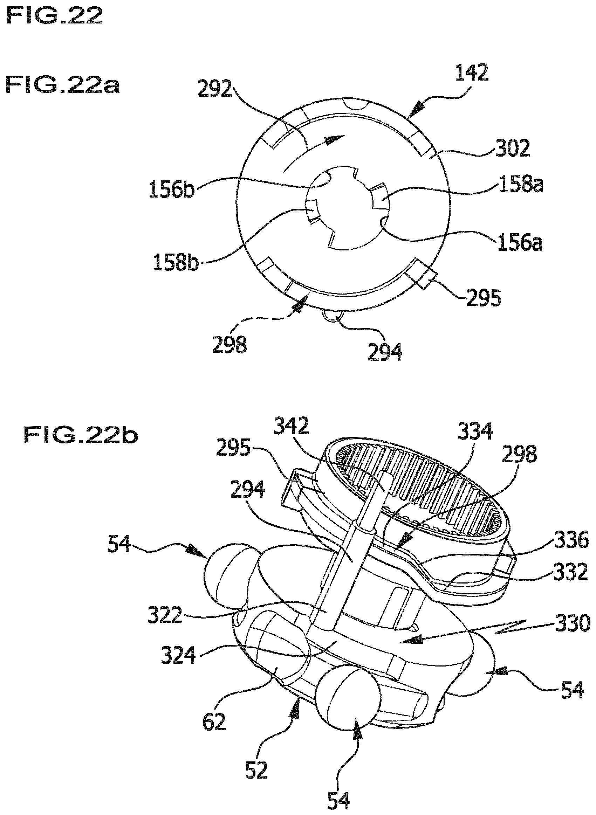

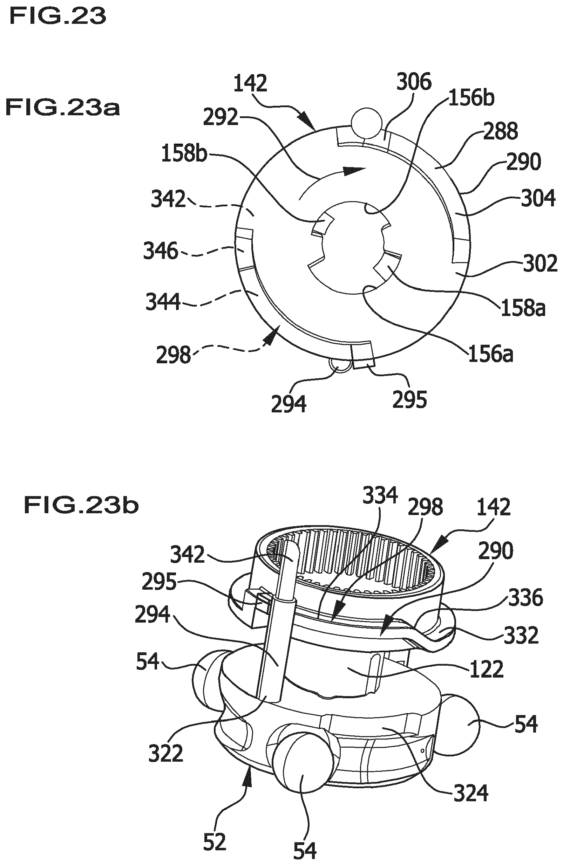

Das Hohlrad 142 kann dabei noch weiter gedreht werden, so lange, bis die Antriebsschlitze 156a, 156b an den Antriebsfingern 158a, 158b in der Drehrichtung 292 anliegen (Fig. 22). Die Mitnahme der Antriebshülse 122 durch Mitdrehen der Antriebsfinger 158a, 158b um die Schwenkachse 22 führt nun dazu, dass zusätzlich auch noch eine Drehung des Betätigungskörpers 52 erfolgt, und zwar, wie in Fig. 22 dargestellt, soweit, bis die Drehblockierkörper 54 in die diesen zugeordneten Rückzugsaufnahmen 62 eintauchen können und somit die Lösestellung erreichen (Fig. 23), in welcher diese in den Rückzugsaufnahmen 62 liegen, so dass nunmehr die Drehblockiereinrichtung 50 in ihrer Lösestellung steht und eine Drehbewegung des Schwenklagerkörpers 14 freigibt, so dass dieser beispielsweise aufgrund der in der Arbeitsstellung A einwirkenden Schwerkraft die Arbeitsstellung A verlässt.

Beim Erreichen der Lösestellung wird die weitere Drehbewegung des Hohlrades 142 in dieser Richtung durch einen an dem Sicherungsstift 294 zur Anlage kommenden Anschlag 295 verhindert und es erfolgt durch das Freigeben der Schwenkbewegung des Schwenklagerkörpers 14 ein Verschwenken desselben.

Läuft der Antrieb des Planetengetriebes 130 weiter, so wird der Betätigungskörper 52 durch das Hohlrad 142 bis zu der durch den Anschlag 295 vorgegebenen Lösestellung verdreht, so dass die Drehblockierkörper 54 maximal tief in die Rückzugsaufnahmen 62 eintreten können, so dass die Drehblockierkörper 54 mit Spiel zwischen den Rückzugsaufnahmen und der Blockierfläche 90 liegen.

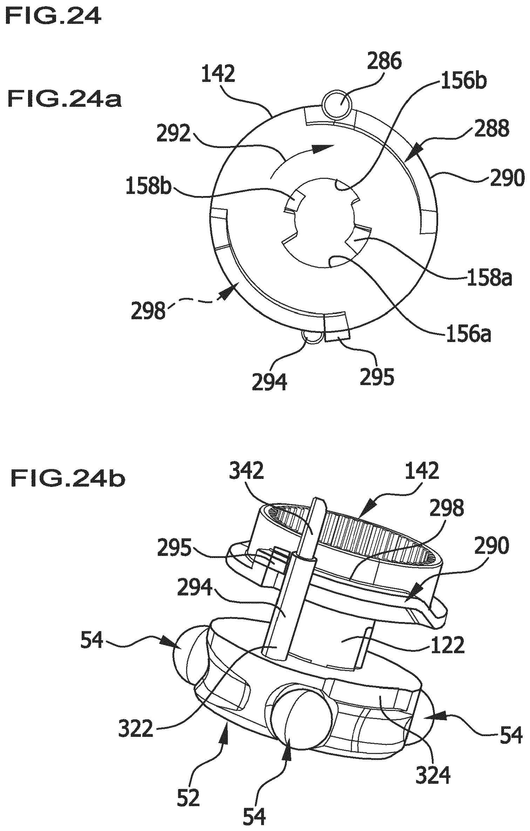

Durch das Verlassen der Arbeitsstellung A erfolgt - wie vorstehend beschrieben - eine Blockade des Betätigungskörpers 52 in der Lösestellung durch mindestens einen an den Blockierflächen 90 anliegenden Drehblockierkörper 54 und außerdem ist auch die Drehstellung der Antriebshülse 122 und somit auch deren Antriebsfinger 158a und 158b in der der Lösestellung des Betätigungskörpers 52 entsprechenden Drehstellung festgelegt, die gemäß Fig. 24 ebenfalls der Drehstellung des Hohlrades 142 entspricht.

Diese Stellung ist in Fig. 24 dargestellt, und wird erreicht durch ausgehend von der Stellung gemäß Fig. 23 erfolgendes Weiterdrehen des Hohlrads 142 in der Drehrichtung 292.

Wird zunächst, insbesondere kurzzeitig, das Planetengetriebe 130 beim Verschwenken des Schwenkelements 14 weiter angetrieben, so bleibt beim Verschwenken des Schwenklagerkörpers 14 mit dem Kugelhals 10 zwischen der Arbeitsstellung A und der Ruhestellung R der Betätigungskörper 52 in der maximal verdrehten Lösestellung.

Nach Abschalten des Antriebs für das Planetengetriebe 130 erfolgt ein Antreiben des Hohlrads 142 durch das Planetengetriebe 130 dergestalt, dass sich dieses in die Ausgangsstellung zurückdreht, und es erfolgt durch das Drehmoment der Drehfeder 114 eine Verdrehung des Betätigungskörpers 52 in der Drehrichtung 72, so dass die Rückzugsaufnahmen 62 mit den gewölbten und schräg zur jeweiligen Führungsrichtung 58 verlaufenden Grundflächen auf die Drehblockierkörper 54 einwirken und mindestens einen derselben an einer der Blockierflächen 90 anlegen bis die jeweils andere Stellung, das heißt die Ruhestellung R oder die Arbeitsstellung A, erreicht ist.

Entfällt die Einwirkung des Hohlrads 142 spätestens kurz vor Erreichen der jeweils anderen Stellung, so wird spätestens dann die Drehfeder 114 den Betätigungskörper 52 in der Drehrichtung 72 so weit verdreht, dass die Rückzugsaufnahmen 62 auf die Drehblockierkörper 54 einwirken und diejenigen Drehblockierkörper 54, die vor einer der Blockierflächen 90 stehen an den Blockierflächen 90 anlegen.

Vor Erreichen der jeweils anderen Stellung, das heißt, ausgehend von der Arbeitsstellung A der Ruhestellung R, oder ausgehend von der Ruhestellung R der Arbeitsstellung A, des Schwenklagerkörpers 14, erfolgt auch ein Abschalten des Antriebs für das Planetengetriebe 130 und ein Zurückdrehen des Planetengetriebes 130 durch den Antrieb in die Ausgangsstellung gemäß Fig. 20, so dass das Hohlrad 142 ebenfalls wieder in die Ausgangsstellung zurückkehrt.

Bei einem Bewegen des Schwenklagerkörpers 14 von der Arbeitsstellung A bis zur Ruhestellung R, oder umgekehrt, ist der Betätigungskörper 52 der Drehblockiereinrichtung 50 durch die Blockierflächen 90 so lange in seiner Lösestellung fixiert, bis ein Lösen der Blockierung des Drehblockierkörpers 52 in der Lösestellung in Abhängigkeit von der Drehstellung des Schwenklagerkörpers 14 erst - wie beschrieben - in der Arbeitsstellung A oder der Ruhestellung R erfolgt.

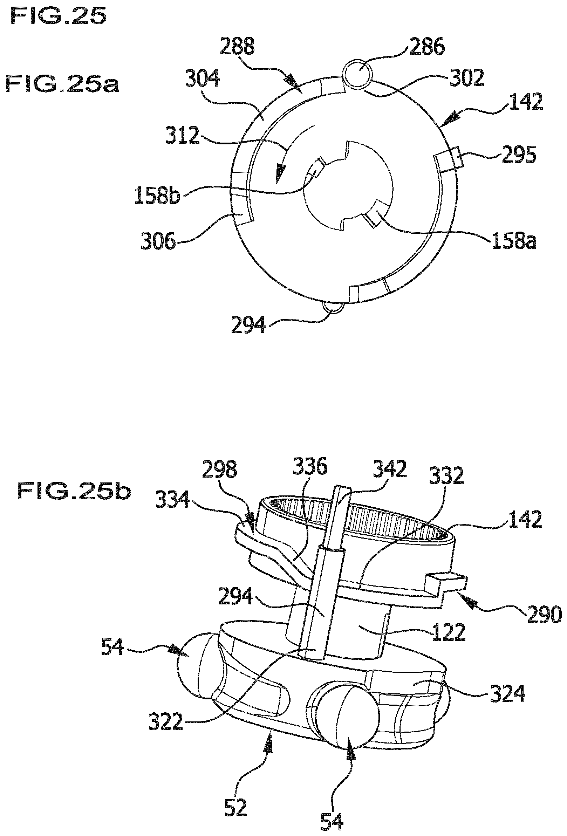

Soll nun wieder ein Übergang des Schwenklagerkörpers 214 in die jeweils anderen Stellung erfolgen, so erfolgt wiederum ein Antreiben des Planetengetriebes 130, in derselben Drehrichtung, so dass sich auch das Hohlrad 142 wieder in derselben Drehrichtung dreht (Fig. 25).

Nach dem Aufheben der Blockierung des Betätigungskörpers 52 in der Arbeitsstellung A oder der Ruhestellung R erfolgt eine Drehbewegung des Betätigungskörpers 52 durch Einwirkung der Drehfeder 114, so dass der Betätigungskörper 52 sich mit der Antriebshülse 122 in der Drehrichtung 312 ebenfalls zu drehen beginnt und sich relativ zum Hohlrad 142 aufgrund der Bewegbarkeit der Antriebsfinger 158 relativ zu den Antriebsschlitzen 156 dreht, was in Fig. 25 dargestellt ist, so dass die Antriebsfinger 158a, 158b sich relativ zu den Antriebsschlitzen 156a und 156b in der Drehrichtung 312 zu bewegen beginnen, um dann wiederum in der Arbeitsstellung die in Fig. 20 dargestellte Drehstellung zu erreichen.

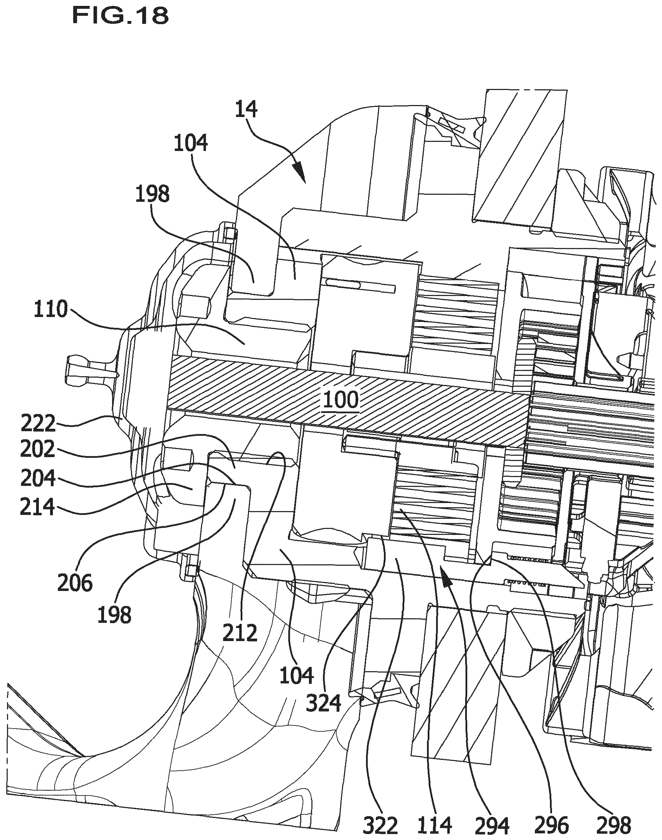

Wie außerdem in den Fig. 20 bis 26 dargestellt, trägt der Kulissenflansch 290 des Hohlrads 142 eine Sicherungskulissenbahn 298 zur Betätigung des Sicherungsstifts 294, dargestellt in den Fig. 18 und 19 sowie in den Fig. 20 bis 26.

Der Sicherungsstift 294 weist dabei einen Sicherungskörper 322 auf, welcher zur Sicherung der Drehstellung des Betätigungskörpers 52 in der Drehblockierstellung in eine Sicherungsausnehmung 324 eingreift, die derart gestaltet ist, dass der Betätigungskörper 52 nicht in der Lage ist, die Drehblockierstellung zu verlassen und somit die Drehblockierstellung in der Arbeitsstellung, das heißt somit auch die Verriegelung des Schwenklagerkörpers 214 in der Arbeitsstellung, gesichert ist.

Der durch die Sicherungskulissenbahn 298 bewegbare Sicherungsstift 294 bildet zusammen mit dem Sicherungskörper 322 und der Sicherungsausnehmung 324 eine Sicherungseinrichtung 330.

Die Sicherungskulissenbahn 298 ist an dem Kulissenflansch 290 angeordnet und derart geformt, dass diese den Sicherungsstift 294 ausgehend von seiner Sicherungsstellung (Fig. 20), in welcher der Sicherungskörper 322 in die Sicherungsausnehmung 324 eingreift, bereits nach der anfänglichen Drehung des Hohlrades 142 ausgehend von der Ausgangsstellung in der Drehrichtung 292 so weit verschiebt, dass der Sicherungskörper 322 die aus der Sicherungsausnehmung 324 des Betätigungskörpers 52 heraustritt (Fig. 21b), um die nachfolgende Drehbewegung des Betätigungskörpers 52 freizugeben.

Die Sicherungskulissenbahn 298 ist hierzu mit einem eine Sicherung der Drehblockierstellung des Betätigungskörpers 52 erlaubenden sichernden Bereich 332 und eine Entsicherung der Bewegung des Drehblockierkörpers 52 bewirkenden entsichernden Bereich 334 versehen, die durch einen Übergangsbereich 336 miteinander verbunden sind.

Darüber hinaus ist der Sicherungsstift 294 noch mit einem Fortsatz 342 versehen, welcher je nach Position des Sicherungsstifts 294 einen Taster 344 betätigt oder nicht betätigt wobei beispielsweise der Taster 344 so angeordnet ist, dass dieser in der entsichernden Stellung des Sicherungsstifts 294 betätigt ist und in der sichernden Stellung des Sicherungsstifts 294 nicht betätigt ist, wie sich aus Fig. 18 und 19 ergibt.

Die erfindungsgemäße Anhängekupplung funktioniert nun folgendermaßen.

Ausgehend von der Arbeitsstellung, dargestellt in den Fig. 1, 2, 3 und 6 sowie 7, in welcher der Schwenklagerkörper 14 relativ zum Führungskörper 40 in Bezug auf eine Drehbewegung um die Schwenkachse 22 durch die Drehblockiereinrichtung 50 drehblockiert ist, nämlich dadurch, dass der Betätigungskörper 52 die Drehblockierkörper 54 in der Führungsrichtung 58 radial so weit von der Schwenkachse 22 weg nach außen bewegt hat, dass diese in die Arbeitsstellungsaufnahmen 60A eingreifen und dadurch den Schwenklagerkörper 14 relativ zum Führungskörper 40 drehblockiert fixieren, bewirkt ein Einschalten der Antriebseinheit 182, dass mit dem Abtriebszahnrad das Antriebszahnrad 174 derart angetrieben wird, dass die Antriebswelle 166 das Sonnenrad 162 antreibt.

Dieses treibt wiederum die Planetenräder 146 an, wobei der Planetenradträger 152 hinsichtlich einer Drehbewegung um die Schwenkachse 22 blockiert ist.

Dadurch erfolgt ein Antrieb des Hohlrades 142 dergestalt, dass dieses sich gemäß Fig. 20 in der Drehrichtung 292 verdreht. Zunächst bewirkt diese Drehung des Hohlrades 142 eine Betätigung der Sicherungseinrichtung 320, wobei durch Verschieben des Sicherungsstifts 294 der Sicherungskörper 322 die Sicherungsausnehmung 324 des Betätigungskörpers 52 verlässt und von der Sicherungsstellung in die Entsicherungsstellung übergeht (Fig. 21). Weiterdrehen des Hohlrads 142 führt bereits zu einer Drehung des Betätigungskörpers 52 der Drehblockiereinrichtung 50.

Erst anschließend erfolgt dann, wie in Fig. 23 bis 24 dargestellt, über die Antriebsschlitze 156 und die Antriebsfinger 158 ein Verdrehen der Antriebshülse 122, die über die Fortsätze 124 mit dem Betätigungskörper 52 drehfest verbunden ist.

Dadurch wird durch das Hohlrad 142 der Betätigungskörper 52 aus der Drehblockierstellung heraus in Richtung seiner Lösestellung verdreht, und zwar so weit bis die Lösestellung erreicht ist.

Da bei Erreichen der Lösestellung des Betätigungskörpers 52 eine Drehbewegung des Schwenklagerkörpers 14 möglich ist und außerdem die Drehbewegung des Betätigungskörpers 52 in Drehrichtung 72 aufgrund der Einwirkung des Hohlrads 142 verhindert ist, bleibt das Hohlrad 142 des Planetengetriebes 130 stehen. In dieser Lösestellung des Betätigungskörpers 52 stehen auch die Drehblockierkörper 54 in der Lösestellung und folglich kann Schwenklagerkörper 14 beispielsweise durch Einwirkung der Schwerkraft oder einer zeichnerisch nicht dargestellten Abschwenkfeder um die Schwenkachse 22 in Richtung der Ruhestellung R verschwenken, wobei der Kugelhals vorzugsweise in einer in Richtung der Fahrbahnoberfläche FO weisenden Zwischenstellung Z stehen bleibt.

Zum Weiterverschwenken in Richtung der Ruhestellung ist eine manuelle Einwirkung vorgesehen.

Nach Verlassen der Arbeitsstellung wird die Antriebseinheit 182 mit umgekehrter Drehrichtung bestromt, so dass sich diese wieder in die Ausgangsstellung gemäß Fig. 20 zurückbewegt, in welcher die Drehblockiereinrichtung 50 durch die Drehfeder 114 beaufschlagt ist.

Bei Erreichen der Ruhestellung R geht die Drehblockiereinrichtung 50 durch die Wirkung der Drehfeder 114 von der Lösestellung in die Drehblockierstellung über, wobei jeder der Drehblockierkörper 54 in eine der Ruhestellungsaufnahmen 60R eingreift.

Soll nun ein Zurückschwenken des Kugelhalses 10 von der Ruhestellung R in die Arbeitsstellung A erfolgen, so wird die Antriebseinheit 182 mit der Drehrichtung betrieben, die den Betätigungskörper 52 wieder in die Lösestellung bewegt.

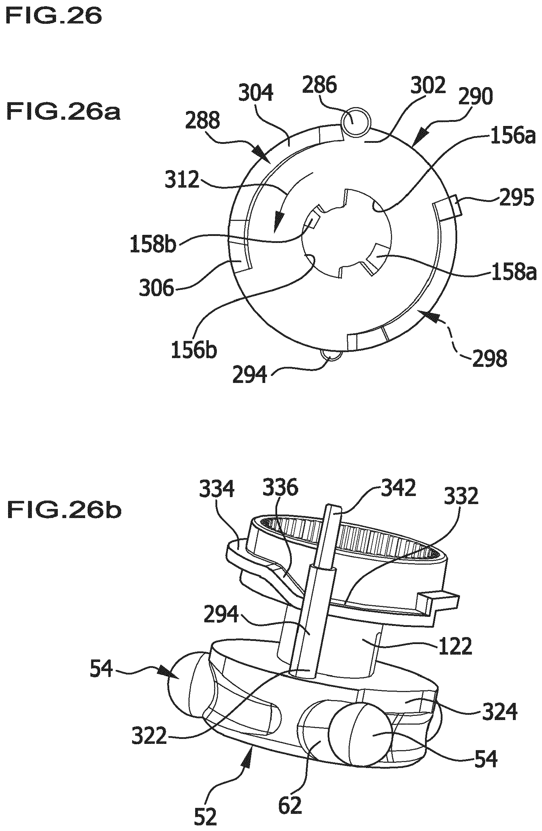

Bei Erreichen der Arbeitsstellung A oder der Ruhestellung R entfällt in der beschriebenen Art und Weise, wie beispielsweise in Fig. 20 dargestellt, die Blockierung des Betätigungskörpers 52 zur Bewegung in der Drehrichtung 72 unter Einwirkung der Drehfeder 114 in Richtung der Drehblockierstellung, wobei die Drehblockierkörper 54 durch den Betätigungskörper 52 radial zur Schwenkachse 22 nach außen in die Aufnahmen 60 gedrückt werden und somit wiederum zu einer Drehblockierung des Schwenklagerkörpers 14 relativ zum Führungskörper 40 führen (Fig. 26).

In der jeweils in der Arbeitsstellung A oder der Ruhestellung R verriegelten Stellung des Schwenklagerkörpers 14 relativ zum Führungskörper 40 wird das Hohlrad 142 in die in Fig. 20 dargestellte Ausgangsstellung gedreht, in welcher der Betätigungskörper 52 eine weitere Drehbewegung in der Drehrichtung 72 unter Einwirkung der Drehfeder 114 ausführen kann, so dass das Hohlrad 142 in der Arbeitsstellung A ein Nachstellen durch Weiterdrehen des Betätigungskörpers 52 in der Drehrichtung 72 unter Einwirkung der Drehfeder 114 nicht behindert.

Bei der erfindungsgemäßen Lösung erfolgt insbesondere zum Lösen der Drehblockiereinrichtung 50 mittels einer Steuerung 350 ein Antreiben des Untersetzungsgetriebes 130 und somit des Hohlrads 142, mittels der Antriebseinheit 182 dergestalt, dass der Betätigungskörper 52 durch ein Einwirken auf den Betätigungskörper 52 entgegen der Kraftwirkung der Drehfeder 114 von der Drehblockierstellung in die Lösestellung bewegt wird.

Anschließend erfolgt entweder nach einer Abfrage der Stellung des Schwenklagerkörpers 14 mittels eines Sensors, beispielsweise eines Drehstellungssensors 352, eine Prüfung ob der Schwenklagerkörper 14 die Arbeitsstellung A oder die Ruhestellung R verlassen hat, oder es wird eine definierte Zeitspanne nach dem Bewegen des Drehblockierkörpers 52 in die Lösestellung, beispielsweise erfasst durch einen ansteigenden Motorstrom der Antriebseinheit 182 nach Anschlagen des Anschlags 295 an dem Sicherungsstift 294, abgewartet und anschließend erfolgt ein Zurückbewegen der Antriebseinheit 182 in eine Ausgangsstellung, beispielsweise durch Zurückdrehen des Untersetzungsgetriebes 130 und somit des Hohlrades 142 in die Ausgangsstellung, so dass die Drehfeder 114 den Betätigungskörper 52 jeweils vor einem Erreichen der Ruhestellung R oder der Arbeitsstellung A des Schwenklagerkörpers 14 mit einer Kraft beaufschlagt und folglich mindestens einer der Drehblockierkörper 54 oder kurz vor Erreichen der Ruhestellung R oder der Arbeitsstellung A alle Drehblockierkörper 54 an den Blockierflächen 90 anliegen, um dann bei Erreichen der Ruhestellung R oder der Arbeitsstellung A über die Öffnungsränder 92 der Arbeitsstellungsaufnahmen 60A oder der Ruhestellungsaufnahmen 60R in diese hineingleiten und in die Drehblockierstellung übergehen.

Ferner wird nach dem Übergang des Betätigungskörpers 52 in die Drehblockierstellung die Sicherungseinrichtung 330 wirksam, so dass der Sicherungsstift 294 mit dem Sicherungskörper 322 in die Sicherungsausnehmung 324 des Betätigungskörpers 52 eingreift und diesen gegen einen Übergang in die Lösestellung sichert.

## Patentansprüche

1. Anhängekupplung, umfassend einen zwischen einer Arbeitsstellung (A) und einer Ruhestellung (R) bewegbaren Kugelhals (10) mit einem an einem ersten Ende angeordneten Schwenklagerkörper (14) und einer an einem zweiten Ende angeordneten Kupplungskugel (18), eine Fahrzeugfest angeordnete Schwenklagereinheit (20), mittels welcher der Schwenklagerkörper (14) zur Ausführung einer Schwenkbewegung um eine Schwenkachse (22) zwischen der Arbeitsstellung (A) und der Ruhestellung (R) verschwenkbar aufgenommen ist, und eine zwischen der Schwenklagereinheit (20) und dem Schwenklagerkörper (14) wirkende Drehblockiereinrichtung (50) mit einerseits mindestens zwei Drehblockiereinheiten (80), von denen jede einen Drehblockierkörper (54) aufweist, der mittels einer Führungsaufnahme (56) eines Führungskörpers (40) in einer Führungsrichtung (58) bewegbar geführt ist und der in der Führungsrichtung (58) durch eine quer zur Führungsrichtung (58) verlaufende, an einem Betätigungskörper (52) vorgesehene Druckfläche (66) bewegbar ist, und mit andererseits mindestens zwei Arbeitsstellungsaufnahmen (60) und mindestens zwei Ruhestellungsaufnahmen (60R), wobei durch eine Bewegung des Betätigungskörpers (52) in einer Betätigungsrichtung (72) die Drehblockierkörper (54) aller Drehblockiereinheiten (80) in der Führungsrichtung (58) bewegbar und beaufschlagbar sind und wobei die Drehblockierkörper (54) aller Drehblockiereinheiten (80) in der Arbeitsstellung (A) oder der Ruhestellung (R) durch Bewegung in der Führungsrichtung (58) in eine Drehblockierstellung bringbar sind und in dieser jeder Drehblockierkörper (54) mit jeweils einer der Arbeitsstellungsaufnahmen (60) oder den Ruhestellungsaufnahmen (60R) in Eingriff kommt, um eine Schwenkbewegung des Schwenklagerkörpers (14) um die Schwenkachse (22) relativ zum Führungskörper (40) zu blockieren, und wobei die Drehblockierkörper (54) in eine Lösestellung bringbar sind und in dieser mit der jeweiligen Arbeitsstellungsaufnahme (60) oder der jeweiligen Ruhestellungsaufnahme (60R) außer Eingriff stehen und die Schwenkbewegung des Schwenklagerkörpers (14) freigeben,
**dadurch gekennzeichnet, dass** die Drehblockiereinheiten (80) zur Bildung einer Drehblockierkonfiguration in Winkelabständen (W) um die Schwenkachse (22) herum angeordnet sind, dass die Arbeitsstellungsaufnahmen (60A) und die Ruhestellungsaufnahmen (60R) zur Bildung jeweils einer Aufnahmenkonfiguration für die Arbeitsstellung (A) und die Ruhestellung (R) in denselben Winkelabständen (W) um die Schwenkachse (22) angeordnet sind wie die Drehblockiereinheiten (80), dass die Drehblockierkonfiguration und die Aufnahmenkonfiguration der Arbeitsstellungsaufnahme (60A) in der Arbeitsstellung (A) beziehungsweise der Ruhestellungsaufnahmen (60R) in der Ruhestellung (R) deckungsgleich zueinander stehen, so dass die Drehblockierkörper (54) in die Arbeitsstellungsaufnahmen beziehungsweise Ruhestellungsaufnahmen eingreifen können, und dass die Winkelabstände (W) zwischen den Drehblockiereinheiten (80) der Drehblockierkonfiguration und die Winkelabstände zwischen den Arbeitsstellungsaufnahmen (60) beziehungsweise den Ruhestellungsaufnahmen (60R) der Aufnahmenkonfigurationen so gewählt sind, dass die Drehblockierkonfiguration und eine der Aufnahmenkonfigurationen nur in der Arbeitsstellung (A) oder der Ruhestellung (R) deckungsgleich zueinander stehen, dass die Winkelabstände (W) mindestens einer der Drehblockiereinheiten (80) zu den in einer Umlaufrichtung um die Schwenkachse (22) sowie zu den entgegengesetzt zu dieser Umlaufrichtung benachbart angeordneten Drehblockiereinheiten (80) ungleich sind, dass in der Arbeitsstellung (A) die Arbeitsstellungsaufnahmen (60A) derart angeordnet sind, dass der Drehblockierkörper (54) jeder der Drehblockiereinheiten (80) mit jeweils einer der Arbeitsstellungsaufnahmen (60A) in Eingriff bringbar ist, dass in der Ruhestellung (R) die Ruhestellungsaufnahmen (60R) derart angeordnet sind, dass der Drehblockierkörper (54) jeder der Drehblockiereinheiten (80) mit jeweils einer der Ruhestellungsaufnahmen (60R) in Eingriff bringbar ist, und dass in allen für den Betrieb vorgesehenen Schwenkstellungen des Schwenklagenkörpers (14), die außerhalb der Arbeitsstellung (A) oder der Ruhestellung (R) liegen, der Drehblockierkörper (54) mindestens einer der Drehblockiereinheiten (80) einer zwischen den Arbeitsstellungsaufnahmen (60A) und den Ruhestellungsaufnahmen (60R) verlaufenden Blockierfläche (90) gegenüberliegt, und die Blockierfläche (90), insbesondere bei einer Kraftbeaufschlagung des Betätigungskörpers (52), eine Bewegung des Betätigungskörpers (52) von der Lösestellung in die Drehblockierstellung blockiert.

2. Anhängekupplung nach Anspruch 1, **dadurch gekennzeichnet, dass** zwischen den Arbeitsstellungsaufnahmen (60A) und den Ruhestellungsaufnahmen (60R) Blockierflächen (90) verlaufen, gegen welche die Drehblockierkörper (54) anlegbar sind und von welchen ausgehend sich die Arbeitsstellungsaufnahmen (60A) und die Ruhestellungsaufnahmen (60R) erstrecken, dass die Drehblockiereinheiten (80) und die Arbeitsstellungsaufnahmen (60A) sowie die Ruhestellungsaufnahmen (60R) um die Schwenkachse (22) herum derart in Winkelabständen (W) voneinander angeordnet sind, dass in allen vorgesehenen Schwenkstellungen des Schwenklagerkörpers (14), ausgenommen die Arbeitsstellung (A) und die Ruhestellung (R), der Drehblockierkörper (54) mindestens einer der Drehblockiereinheiten (80) einer der Blockierflächen (90) gegenüberliegt und somit diese Blockierflächen (90), insbesondere bei einer Kraftbeaufschlagung des Betätigungskörpers (52) in Richtung der Betätigungsrichtung (72), eine Bewegung des Betätigungskörpers (52) in der Betätigungsrichtung (72) und folglich auch ein kraftbeaufschlagtes Eingreifen der Drehblockierkörper (54) jeder der Drehblockiereinheiten (80) in eine der Arbeitsstellungsaufnahmen (60A) oder der Ruhestellungsaufnahmen (60R) blockiert.

3. Anhängekupplung nach einem der voranstehenden Ansprüche, **dadurch gekennzeichnet, dass** die Blockierflächen (90) den Drehblockierkörpern (54) der Drehblockiereinheiten (80) zugewandt verlaufen.

4. Anhängekupplung nach einem der voranstehenden Ansprüche, **dadurch gekennzeichnet, dass** die Blockierflächen (90) in einem definierten Radius um die Schwenkachse (22) verlaufen.

5. Anhängekupplung nach einem der voranstehenden Ansprüche, **dadurch gekennzeichnet, dass** die Blockierflächen (90) bis zu Öffnungsrändern (92) der Arbeitsstellungsaufnahmen (60A) und der Ruhestellungsaufnahmen (60R) verlaufen und in diese übergehen.

6. Anhängekupplung nach Anspruch 5, **dadurch gekennzeichnet, dass** die Öffnungsränder (92) der Arbeitsstellungsaufnahmen (60A) und der Ruhestellungsaufnahmen (60R) in demselben radialen Abstand von der Schwenkachse (22) liegen wie die Blockierflächen (90)

7. Anhängekupplung nach einem der voranstehenden Ansprüche, **dadurch gekennzeichnet, dass** mindestens einer der Drehblockierkörper (54) der Drehblockiereinheiten (80) bei einer Schwenkbewegung des Schwenklagerkörpers (14) in Richtung der Arbeitsstellung (A) an einer der Blockierflächen (90) anliegt, insbesondere durch die Einwirkung des Betätigungskörpers (52), kraftbeaufschlagt anliegt.

8. Anhängekupplung nach einem der voranstehenden Ansprüche, **dadurch gekennzeichnet, dass** die Drehblockierkörper (54) vor Erreichen der Arbeitsstellung (A) an den Blockierflächen (90) kraftbeaufschlagt anliegen und anschließend an Öffnungsrändern (92) der Arbeitsstellungsaufnahmen (60A) kraftbeaufschlagt anliegend in die Arbeitsstellungsaufnahmen (60A) eintreten.

9. Anhängekupplung nach einem der voranstehenden Ansprüche, **dadurch gekennzeichnet, dass** sich die Arbeitsstellungsaufnahmen (60A) ausgehend von den Blockierflächen (90) in der Führungsrichtung (58), insbesondere mit mindestens einer Komponente in radialer Richtung zur Schwenkachse (22), erstrecken.

10. Anhängekupplung nach einem der voranstehenden Ansprüche, **dadurch gekennzeichnet, dass** mindestens einer der Drehblockierkörper (54) der Drehblockiereinheiten (80) bei einer Schwenkbewegung des Schwenklagerkörpers (14) in Richtung der Ruhestellung (R) an einer der Blockierflächen (90) anliegt, insbesondere durch die Einwirkung des Betätigungskörpers (52), kraftbeaufschlagt anliegt.

11. Anhängekupplung nach einem der voranstehenden Ansprüche, **dadurch gekennzeichnet, dass** die Drehblockierkörper (54) vor Erreichen der Ruhestellung (R) an den Blockierflächen (90) kraftbeaufschlagt anliegen und anschließend an Öffnungsrändern (92) der Ruhestellungsaufahmen (60R) kraftbeaufschlagt anliegend in die Ruhestellungsaufnahmen (60R) eintreten.

12. Anhängekupplung nach einem der voranstehenden Ansprüche, **dadurch gekennzeichnet, dass** sich die Ruhestellungsaufnahmen (60R) ausgehend von den Blockierflächen (90) in der Führungsrichtung (58), insbesondere mit mindestens einer Komponente in radialer Richtung zur Schwenkachse (22), erstrecken.

13. Anhängekupplung nach einem der voranstehenden Ansprüche, **dadurch gekennzeichnet, dass** die Arbeitsstellungsaufnahmen (60A), die Ruhestellungsaufnahmen (60R) und die Blockierflächen (90) dem Führungskörper (40) zugewandt angeordnet sind.

14. Anhängekupplung nach einem der voranstehenden Ansprüche, **dadurch gekennzeichnet, dass** der Führungskörper (40) ein Teil der fahrzeugfest angeordneten Schwenklagereinheit (20) ist, dass insbesondere in dem Führungskörper (40) alle Führungsaufnahmen (56) für die Drehblockierkörper (54) der Drehblockiereinheiten (80) angeordnet sind, dass insbesondere die Führungsrichtung (58) mit mindestens einer Komponente in radialer Richtung zur Schwenkachse (22) verläuft, dass insbesondere der Führungskörper (40) eine Führungshülse (44) mit Führungsaufnahmen (56) für die Drehblockierkörper (54) der Drehblockiereinheiten (80) aufweist und dass insbesondere die Drehblockierkörper (54) durch den sich in radialer Richtung an den Schwenklagerkörper (14) anschließenden Führungskörper (40) geführt sind.

15. Anhängekupplung nach einem der voranstehenden Ansprüche, **dadurch gekennzeichnet, dass** der Führungskörper (40) ein Schwenklager für den Schwenklagerkörper (14) aufweist.

16. Anhängekupplung nach einem der voranstehenden Ansprüche, **dadurch gekennzeichnet, dass** der Betätigungskörper (52) relativ zu dem Führungskörper (40) bewegbar geführt ist, dass insbesondere der Betätigungskörper (52) um die Schwenkachse (22) drehbar angeordnet ist und insbesondere sich über einen Winkelbereich um die Schwenkachse (22) erstreckende und in Richtung parallel zur Führungsrichtung (58) variierende Keilflächen (66) vorzugsweise kombiniert mit Rückzugsaufnahmen (62) aufweist.

17. Anhängekupplung nach einem der voranstehenden Ansprüche, **dadurch gekennzeichnet, dass** die Aufnahmen (60) und die Blockierflächen (90) an dem Schwenklagerkörper (14) angeordnet sind.

18. Anhängekupplung nach einem der voranstehenden Ansprüche, **dadurch gekennzeichnet, dass** der Betätigungskörper (52) von dem Führungskörper (40) umschlossen ist und dass insbesondere der Schwenklagerkörper (14) den Führungskörper (40) umgreift, dass insbesondere die Drehblockierkörper (54) um den Betätigungskörper (52) herum angeordnet sind, dass insbesondere der Schwenklagerkörper (14) einen die Schwenklagereinheit (20) außenliegend umschließenden Außenkörper bildet, der relativ zu der Schwenklagereinheit (20) in Richtung der Schwenkachse (22) unverschiebbar angeordnet ist, und dass insbesondere der Schwenklagerkörper (14) einen zumindest einen Teilbereich der Drehblockiereinheit (50) außenliegend umschließenden Außenkörper bildet, der relativ zu dem Führungskörper (40) in Richtung der Schwenkachse (22) unverschiebbar angeordnet ist.

19. Anhängekupplung nach einem der voranstehenden Ansprüche, **dadurch gekennzeichnet, dass** der Betätigungskörper (52) durch einen elastischen Kraftspeicher (114) in Richtung seiner Drehblockierstellung beaufschlagt ist, dass insbesondere der Betätigungskörper (52) durch eine Betätigungseinrichtung (180) von der Drehblockierstellung in die Lösestellung bewegbar ist, dass insbesondere der Betätigungskörper (52) durch die Betätigungseinrichtung (180) entgegen der Beaufschlagung durch den Kraftspeicher (114) bewegbar ist, dass insbesondere mit der Betätigungseinrichtung (180) der Betätigungskörper (52) entgegengesetzt zur durch den elastischen Kraftspeicher (114) bewirkten Betätigungsrichtung (72) verdrehbar ist, dass insbesondere die Betätigungseinrichtung (180) ein Abtriebselement (142) aufweist, welches mit dem Betätigungskörper (52) gekoppelt ist, dass insbesondere das Abtriebselement (142) und der Betätigungskörper (52) über eine Mitnahmekopplungseinrichtung (156, 158) miteinander gekoppelt sind, dass insbesondere die Mitnahmekopplungseinrichtung (156, 158) einen mitnahmefreien Freigangzustand und einen Mitnahmezustand aufweist.

## Claims

1. A trailer coupling, comprising a ball neck (10), which is movable between a working position (A) and a rest position (R) and has a pivot bearing body (14) arranged at a first end and a coupling ball (18) arranged at a second end, a pivot bearing unit (20), which is arranged fixed to a vehicle and by means of which the pivot bearing body (14) is received such that it is pivotal for the purpose of performing a pivotal movement about a pivot axis (22) between the working position (A) and the rest position (R), and a rotation-blocking device (50) that is active between the pivot bearing unit (20) and the pivot bearing body (14) and has on the one hand at least two rotation-blocking units (80), each of which has a rotation-blocking body (54) that is guided in a manner movable in a guide direction (58) by means of a guide receptacle (56) in a guide body (40) and is movable in the guide direction (58) by a pressure face (66) provided on an actuation body (52) and running transversely to the guide direction (58), and on the other hand has at least two working position receptacles (60) and at least two rest position receptacles (60R), wherein a movement of the actuation body (52) in an actuation direction (72) makes the rotation-blocking bodies (54) of all the rotation-blocking units (80) movable and urgeable in the guide direction (58), and wherein, in the working position (A) or the rest position (R), the rotation-blocking bodies (54) of all the rotation-blocking units (80) are configured to be brought into a rotation-blocking position by movement in the guide direction (58), and in this position each rotation-blocking body (54) comes into engagement with a respective one of the working position receptacles (60) or the rest position receptacles (60R) in order to block a pivotal movement of the pivot bearing body (14) about the pivot axis (22) in relation to the guide body (40), and wherein the rotation-blocking bodies (54) are configured to be brought into a release position, and in this position are disengaged from the respective working position receptacle (60) or the respective rest position receptacle (60R) and enable the pivotal movement of the pivot bearing body (14),
**characterized in that** the rotation-blocking units (80) for forming a rotation-blocking configuration are arranged at angular spacings (W) around the pivot axis (22), **in that** the working position receptacles (60A) and the rest position receptacles (60R) for forming a respective receptacle configuration for the working position (A) and the rest position (R) are arranged at the same angular spacings (W) around the pivot axis (22) as the rotation-blocking units (80), **in that** the rotation-blocking configuration and the receptacle configuration of the working position receptacle (60A) in the working position (A) or the rest position receptacles (60R) in the rest position (R) are mutually congruent such that the rotation-blocking bodies (54) can engage in the working position receptacles or the rest position receptacles, and **in that** the angular spacings (W) between the rotation-blocking units (80) of the rotation-blocking configuration and the angular spacings between the working position receptacles (60) and the rest position receptacles (60R) of the receptacle configurations are selected such that the rotation-blocking configuration and one of the receptacle configurations are only mutually congruent in the working position (A) or the rest position (R), **in that** the angular spacings (W) of at least one of the rotation-blocking units (80) in relation to the rotation-blocking units (80) arranged in a direction of revolution around the pivot axis (22) and in relation to the rotation-blocking units (80) arranged adjacent and in opposition to this direction of revolution are dissimilar, **in that** in the working position (A) the working position receptacles (60A) are arranged such that the rotation-blocking body (54) of each of the rotation-blocking units (80) is configured to be brought into engagement with a respective one of the working position receptacles (60A), **in that** in the rest position (R) the rest position receptacles (60R) are arranged such that the rotation-blocking body (54) of each of the rotation-blocking units (80) is configured to be brought into engagement with a respective one of the rest position receptacles (60R), and **in that**, in all the pivotal positions of the pivot bearing body (14) that are provided for operation and are outside the working position (A) and the rest position (R), the rotation-blocking body (54) of at least one of the rotation-blocking units (80) lies opposite a blocking face (90) running between the working position receptacles (60A) and the rest position receptacles (60R), and, in particular if there is a force acting on the actuation body (52), the blocking face (90) blocks movement of the actuation body (52) from the release position into the rotation-blocking position.

2. The trailer coupling according to claim 1, **characterized in that** there run between the working position receptacles (60A) and the rest position receptacles (60R) blocking faces (90) against which the rotation-blocking bodies (54) are configured to abut and from which the working position receptacles (60A) and the rest position receptacles (60R) extend, **in that** the rotation-blocking units (80) and the working position receptacles (60A) and the rest position receptacles (60R) are arranged at angular spacings (W) from one another around the pivot axis (22) such that, in all the pivotal positions of the pivot bearing body (14) that are provided, with the exception of the working position (A) and the rest position (R), the rotation-blocking body (54) of at least one of the rotation-blocking units (80) lies opposite one of the blocking faces (90), and thus, in particular if there is a force urging the actuation body (52) in the direction of the actuation direction (72), these blocking faces (90) blocks movement of the actuation body (52) in the actuation direction (72) and consequently also blocks engagement, urged by force, of the rotation-blocking bodies (54) of each of the rotation-blocking units (80) in one of the working position receptacles (60A) or rest position receptacles (60R).

3. The trailer coupling as claimed in one of the preceding claims, **characterized in that** the blocking faces (90) run facing the rotation-blocking bodies (54) of the rotation-blocking units (80).

4. The trailer coupling as claimed in one of the preceding claims, **characterized in that** the blocking faces (90) run around the pivot axis (22) at a defined radius.

5. The trailer coupling as claimed in one of the preceding claims, **characterized in that** the blocking faces (90) run as far as opening edges (92) of the working position receptacles (60A) and the rest position receptacles (60R) and undergo a transition into these.

6. The trailer coupling as claimed in claim 5, **characterized in that** the opening edges (92) of the working position receptacles (60A) and the rest position receptacles (60R) are located at the same radial spacing from the pivot axis (22) as the blocking faces (90).

7. The trailer coupling as claimed in one of the preceding claims, **characterized in that**, in the event of a pivotal movement of the pivot bearing body (14) in the direction of the working position (A), at least one of the rotation-blocking bodies (54) of the rotation-blocking units (80) abuts against one of the blocking faces (90), in particular abutting in a manner urged by force by the action of the actuation body (52).

8. The trailer coupling as claimed in one of the preceding claims, **characterized in that**, before reaching the working position (A), the rotation-blocking bodies (54) abut against the blocking faces (90) in a manner urged by force and then enter the working position receptacles (60A) such that they abut against opening edges (92) of the working position receptacles (60A) in a manner urged by force.

9. The trailer coupling as claimed in one of the preceding claims, **characterized in that** the working position receptacles (60A) extend in the guide direction (58) from the blocking faces (90), in particular with at least one component in the radial direction relative to the pivot axis (22).

10. The trailer coupling as claimed in one of the preceding claims, **characterized in that**, in the event of a pivotal movement of the pivot bearing body (14) in the direction of the rest position (R), at least one of the rotation-blocking bodies (54) of the rotation-blocking units (80) abuts against one of the blocking faces (90), in particular abutting in a manner urged by force by the action of the actuation body (52).

11. The trailer coupling as claimed in one of the preceding claims, **characterized in that**, before reaching the rest position (R), the rotation-blocking bodies (54) abut against the blocking faces (90) in a manner urged by force and then enter the rest position receptacles (60R) such that they abut against opening edges (92) of the rest position receptacles (60R) in a manner urged by force.

12. The trailer coupling as claimed in one of the preceding claims, **characterized in that** the rest position receptacles (60R) extend in the guide direction (58) from the blocking faces (90), in particular with at least one component in the radial direction relative to the pivot axis (22).

13. The trailer coupling as claimed in one of the preceding claims, **characterized in that** the working position receptacles (60A), the rest position receptacles (60R) and the blocking faces (90) are arranged facing the guide body (40).

14. The trailer coupling as claimed in one of the preceding claims, **characterized in that** the guide body (40) is part of the pivot bearing unit (20) arranged fixed to the vehicle, **in that** in particular all the guide receptacles (56) for the rotation-blocking bodies (54) of the rotation-blocking units (80) are arranged in the guide body (40), **in that** in particular at least one component of the guide direction (58) runs in the radial direction in relation to the pivot axis (22), **in that** in particular the guide body (40) has a guide sleeve (44) with guide receptacles (56) for the rotation-blocking bodies (54) of the rotation-blocking units (80), and **in that** in particular the rotation-blocking bodies (54) are guided by the guide body (40) adjoining the pivot bearing body (14) in the radial direction.

15. The trailer coupling as claimed in one of the preceding claims, **characterized in that** the guide body (40) has a pivot bearing for the pivot bearing body (14).

16. The trailer coupling as claimed in one of the preceding claims, **characterized in that** the actuation body (52) is guided such that it is movable in relation to the guide body (40), **in that** in particular the actuation body (52) is arranged such that it is rotatable about the pivot axis (22) and in particular has wedge faces (66) extending over an angular range around the pivot axis (22) and varying in the direction parallel to the guide direction (58), preferably combined with retraction receptacles (62).

17. The trailer coupling as claimed in one of the preceding claims, **characterized in that** the receptacles (60) and the blocking faces (90) are arranged on the pivot bearing body (14).

18. The trailer coupling as claimed in one of the preceding claims, **characterized in that** the actuation body (52) is surrounded by the guide body (40), and **in that** in particular the pivot bearing body (14) embraces the guide body (40), **in that** in particular the rotation-blocking bodies (54) are arranged around the actuation body (52), **in that** in particular the pivot bearing body (14) forms an outer body outwardly surrounding the pivot bearing unit (20), wherein the outer body is arranged to be non-displaceable in the direction of the pivot axis (22) in relation to the pivot bearing unit (20), and **in that** in particular the pivot bearing body (14) forms an outer body that outwardly surrounds at least one section of the rotation-blocking unit (50) and that is arranged to be non-displaceable in the direction of the pivot axis (22) in relation to the guide body (40).

19. The trailer coupling as claimed in one of the preceding claims, **characterized in that** the actuation body (52) is urged in the direction of its rotation-blocking position by a resilient energy store (114), **in that** in particular the actuation body (52) is movable from the rotation-blocking position into the release position by an actuation device (180), **in that** in particular the actuation body (52) is movable by the actuation device (180) in opposition to urging by the energy store (114), **in that** in particular as a result of the actuation device (180), the actuation body (52) is rotatable in opposition to the actuation direction (72) brought about by the resilient energy store (114), **in that** in particular the actuation device (180) has an output element (142) that is coupled to the actuation body (52), **in that** in particular the output element (142) and the actuation body (52) are coupled to one another by way of an entraining coupling device (156, 158), **in that** in particular the entraining coupling device (156, 158) has a free condition, with no entrainment, and an entraining condition.

## Revendications

1. Attelage de remorque comprenant un col porte-boule (10) mobile entre une position de travail (A) et une position de repos (R) avec un corps de palier pivotant (14) disposé à une première extrémité et une boule d'attelage (18) disposée à une deuxième extrémité, une unité de palier pivotant (20) disposée de manière fixée au véhicule, au moyen de laquelle le corps de palier pivotant (14) est monté de manière à pouvoir pivoter entre la position de travail (A) et la position de repos (R) pour exécuter un mouvement de pivotement autour d'un axe de pivotement (22), et un dispositif de blocage de rotation (50) agissant entre l'unité de palier pivotant (20) et le corps de palier pivotant (14) avec d'une part au moins deux unités de blocage de rotation (80), dont chacune présente un corps de blocage de rotation (54) qui est guidé de manière mobile dans une direction de guidage (58) au moyen d'un logement de guidage (56) d'un corps de guidage (40) et qui peut être mis en mouvement dans la direction de guidage (58) par une surface de pression (66) s'étendant transversalement par rapport à la direction de guidage (58), prévue sur un corps d'actionnement (52), et avec d'autre part au moins deux logements de position de travail (60) et au moins deux logements de position de repos (60R), dans lequel les corps de blocage de rotation (54) de toutes les unités de blocage de rotation (80) peuvent être mis en mouvement et peuvent être sollicités dans la direction de guidage (58) par un mouvement du corps d'actionnement (52) dans une direction d'actionnement (72), et dans lequel les corps de blocage de rotation (54) de toutes les unités de blocage de rotation (80) dans la position de travail (A) ou la position de repos (R) peuvent être amenés par mouvement dans la direction de guidage (58) dans une position de blocage de rotation et dans celle-ci chaque corps de blocage de rotation (54) vient en prise avec respectivement l'un des logements de position de travail (60) ou les logements de position de repos (60R) afin de bloquer un mouvement de pivotement du corps de palier pivotant (14) autour de l'axe de pivotement (22) par rapport au corps de guidage (40), et dans lequel les corps de blocage de rotation (54) peuvent être amenés dans une position de desserrage et dans celle-ci sont hors de prise avec le logement de position de travail (60) respectif ou le logement de position de repos (60R) respectif et libèrent le mouvement de pivotement du corps de palier pivotant (14),
**caractérisé en ce que** les unités de blocage de rotation (80) pour former une configuration de blocage de rotation sont disposées à des distances angulaires (W) autour de l'axe de pivotement (22), que les logements de position de travail (60A) et les logements de position de repos (60R) pour former respectivement une configuration de logement pour la position de travail (A) et la position de repos (R) sont disposés autour de l'axe de pivotement (22) aux mêmes distances angulaires (W) que les unités de blocage de rotation (80), que la configuration de blocage de rotation et la configuration de logement du logement de position de travail (60A) dans la position de travail (A) ou des logements de position de repos (60R) dans la position de repos (R) coïncident, de sorte que les corps de blocage de rotation (54) peuvent s'insérer dans les logements de position de travail ou les logements de position de repos, et que les distances angulaires (W) entre les unités de blocage de rotation (80) de la configuration de blocage de rotation et les distances angulaires entre les logements de position de travail (60) ou les logements de position de repos (60R) des configurations de logement sont choisies de sorte que la configuration de blocage de rotation et l'une des configurations de logement ne coïncident que dans la position de travail (A) ou la position de repos (R), que les distances angulaires (W) d'au moins une des unités de blocage de rotation (80) par rapport aux unités de blocage de rotation (80) disposées dans une direction de circulation autour de l'axe de pivotement (22) et par rapport à celles disposées de manière adjacente à l'opposé de cette direction de circulation sont inégales, que dans la position de travail (A), les logements de position de travail (60A) sont disposés de sorte que le corps de blocage de rotation (54) de chacune des unités de blocage de rotation (80) peut être amené en prise avec respectivement un des logements de position de travail (60A), que dans la position de repos (R) les logements de position de repos (60R) sont disposés de sorte que le corps de blocage de rotation (54) de chacune des unités de blocage de rotation (80) peut être amené en prise avec respectivement un des logements de position de repos (60R), et que dans toutes les positions de pivotement du corps de palier pivotant (14) prévues pour le fonctionnement, qui se situent en dehors de la position de travail (A) ou de la position de repos (R), le corps de blocage de rotation (54) d'au moins une des unités de blocage de rotation (80) est opposé à une surface de blocage (90) s'étendant entre les logements de position de travail (60A) et les logements de position de repos (60R), et la surface de blocage (90), en particulier lorsque le corps d'actionnement (52) est sollicité par une force, bloque un mouvement du corps d'actionnement (52) à partir de la position de desserrage dans la position de blocage de rotation.

2. Attelage de remorque selon la revendication 1, **caractérisé en ce que** des surfaces de blocage (90), contre lesquelles les corps de blocage de rotation (54) peuvent être placés et à partir desquelles s'étendent les logements de position de travail (60A) et les logements de position de repos (60R), s'étendent entre les logements de position de travail (60A) et les logements de position de repos (60R), de sorte que les unités de blocage de rotation (80) et les logements de position de travail (60A) ainsi que les logements de position de repos (60R) sont disposés autour de l'axe de pivotement (22) à distances angulaires (W) les uns des autres, de sorte que dans toutes les positions de pivotement prévues du corps de palier pivotant (14), à l'exception de la position de travail (A) et de la position de repos (R), le corps de blocage de rotation (54) d'au moins l'une des unités de blocage de rotation (80) se situe à l'opposé d'une des surfaces de blocage (90) et ces surfaces de blocage (90), en particulier lorsque le corps d'actionnement (52) est sollicité par une force en direction de la direction d'actionnement (72), bloque un mouvement du corps d'actionnement (52) dans la direction d'actionnement (72) et par conséquent également une insertion sollicitée par une force des corps de blocage de rotation (54) de chacune des unités de blocage de rotation (80) dans un des logements de position de travail (60A) ou des logements de position de repos (60R).

3. Attelage de remorque selon l'une quelconque des revendications précédentes, **caractérisé en ce que** les surfaces de blocage (90) s'étendent de manière orientée vers les corps de blocage de rotation (54) des unités de blocage de rotation (80).

4. Attelage de remorque selon l'une quelconque des revendications précédentes, **caractérisé en ce que** les surfaces de blocage (90) s'étendent dans un rayon défini autour de l'axe de pivotement (22).

5. Attelage de remorque selon l'une quelconque des revendications précédentes, **caractérisé en ce que** les surfaces de blocage (90) s'étendent jusqu'aux bords d'ouverture (92) des logements de position de travail (60A) et des logements de position de repos (60R) et se prolongent en ceux-ci.

6. Attelage de remorque selon la revendication 5, **caractérisé en ce que** les bords d'ouverture (92) des logements de position de travail (60A) et des logements de position de repos (60R) se situent à la même distance radiale de l'axe de pivotement (22) que les surfaces de blocage (90).

7. Attelage de remorque selon l'une quelconque des revendications précédentes, **caractérisé en ce qu'**au moins l'un des corps de blocage de rotation (54) des unités de blocage de rotation (80) lors d'un mouvement de pivotement du corps de palier pivotant (14) en direction de la position de travail (A) s'applique contre l'une des surfaces de blocage (90), en particulier s'applique de manière sollicitée par une force par l'action du corps d'actionnement (52).

8. Attelage de remorque selon l'une quelconque des revendications précédentes, **caractérisé en ce que** les corps de blocage de rotation (54) avant d'atteindre la position de travail (A) s'appliquent contre les surfaces de blocage (90) de manière sollicitée par une force et pénètrent ensuite dans les logements de position de travail (60A) de manière sollicitée par une force en s'appliquant contre les bords d'ouverture (92) des logements de position de travail (60A).

9. Attelage de remorque selon l'une quelconque des revendications précédentes, **caractérisé en ce que** les logements de position de travail (60A) s'étendent à partir des surfaces de blocage (90) dans la direction de guidage (58), en particulier avec au moins une composante dans la direction radiale par rapport à l'axe de pivotement (22).

10. Attelage de remorque selon l'une quelconque des revendications précédentes, **caractérisé en ce qu'**au moins l'un des corps de blocage de rotation (54) des unités de blocage de rotation (80) s'applique, en particulier s'applique de manière sollicitée par une force par l'action du corps d'actionnement (52), contre l'une des surfaces de blocage (90), lors d'un mouvement de pivotement du corps de palier pivotant (14) en direction de la position de repos (R).

11. Attelage de remorque selon l'une quelconque des revendications précédentes, **caractérisé en ce que** les corps de blocage de rotation (54) avant d'atteindre la position de repos (R) s'appliquent de manière sollicitée par une force contre les surfaces de blocage (90) et pénètrent ensuite dans les logements de position de repos (60R) de manière sollicitée par une force en s'appliquant contre les bords d'ouverture (92) des logements de position de repos (60R).

12. Attelage de remorque selon l'une quelconque des revendications précédentes, **caractérisé en ce que** les logements de position de repos (60R) s'étendent à partir des surfaces de blocage (90) dans la direction de guidage (58), en particulier avec au moins une composante dans la direction radiale par rapport à l'axe de pivotement (22).

13. Attelage de remorque selon l'une quelconque des revendications précédentes, **caractérisé en ce que** les logements de position de travail (60A), les logements de position de repos (60R) et les surfaces de blocage (90) sont disposés de manière orientée vers le corps de guidage (40).

14. Attelage de remorque selon l'une quelconque des revendications précédentes, **caractérisé en ce que** le corps de guidage (40) fait partie de l'unité de palier pivotant (20) disposée de manière fixée au véhicule, qu'en particulier tous les logements de guidage (56) pour les corps de blocage de rotation (54) des unités de blocage de rotation (80) sont disposés dans le corps de guidage (40), qu'en particulier la direction de guidage (58) s'étend avec au moins une composante dans la direction radiale par rapport à l'axe de pivotement (22), qu'en particulier le corps de guidage (40) présente une douille de guidage (44) avec des logements de guidage (56) pour les corps de blocage de rotation (54) des unités de blocage de rotation (80) et qu'en particulier les corps de blocage de rotation (54) sont guidés par le corps de guidage (40) adjacent au corps de palier pivotant (14) dans la direction radiale.

15. Attelage de remorque selon l'une quelconque des revendications précédentes, **caractérisé en ce que** le corps de guidage (40) présente un palier pivotant pour le corps de palier pivotant (14).

16. Attelage de remorque selon l'une quelconque des revendications précédentes, **caractérisé en ce que** le corps d'actionnement (52) est guidé de manière mobile par rapport au corps de guidage (40), qu'en particulier le corps d'actionnement (52) est disposé de manière à pouvoir tourner autour de l'axe de pivotement (22) et présente en particulier des surfaces cunéiformes (66) s'étendant sur une plage angulaire autour de l'axe de pivotement (22) et variant dans une direction parallèle à la direction de guidage (58) de préférence de manière combinée à des logements de retrait (62).

17. Attelage de remorque selon l'une quelconque des revendications précédentes, **caractérisé en ce que** les logements (60) et les surfaces de blocage (90) sont disposés sur le corps de palier pivotant (14).

18. Attelage de remorque selon l'une quelconque des revendications précédentes, **caractérisé en ce que** le corps d'actionnement (52) est entouré par le corps de guidage (40) et qu'en particulier le corps de palier pivotant (14) enserre le corps de guidage (40), qu'en particulier les corps de blocage de rotation (54) sont disposés autour du corps d'actionnement (52), qu'en particulier le corps de palier pivotant (14) forme un corps extérieur entourant extérieurement l'unité de palier pivotant (20), qui est disposé de manière à ne pas pouvoir se déplacer en direction de l'axe de pivotement (22) par rapport à l'unité de palier pivotant (20), et qu'en particulier le corps de palier pivotant (14) forme un corps extérieur entourant extérieurement au moins une zone partielle de l'unité de blocage de rotation (50), qui est disposé de manière à ne pas pouvoir se déplacer par rapport au corps de guidage (40) en direction de l'axe de pivotement (22).

19. Attelage de remorque selon l'une quelconque des revendications précédentes, **caractérisé en ce que** le corps d'actionnement (52) est sollicité par un accumulateur de force (114) élastique en direction de sa position de blocage de rotation, qu'en particulier le corps d'actionnement (52) peut être mis en mouvement par un dispositif d'actionnement (180) à partir de la position de blocage de rotation dans la position de desserrage, qu'en particulier le corps d'actionnement (52) peut être mis en mouvement par le dispositif d'actionnement (180) à l'encontre de la sollicitation par l'accumulateur de force (114), qu'en particulier avec le dispositif d'actionnement (180), le corps d'actionnement (52) peut être amené en rotation à l'opposé de la direction d'actionnement (72) provoquée par l'accumulateur de force (114) élastique, qu'en particulier le dispositif d'actionnement (180) présente un élément de sortie (142), lequel est accouplé au corps d'actionnement (52), qu'en particulier l'élément de sortie (142) et le corps d'actionnement (52) sont accouplés l'un à l'autre par un dispositif d'accouplement d'entraînement (156, 158), qu'en particulier le dispositif d'accouplement d'entraînement (156, 158) présente un état de mouvement libre exempt d'entraînement et un état d'entraînement.
